(19)

Europäisches Patentamt
European Patent Office
Office européen des brevets

(11) **EP 1 887 792 A2**

(12) **EUROPEAN PATENT APPLICATION**

(43) Date of publication:
**13.02.2008 Bulletin 2008/07**

(51) Int Cl.:
**H04N 5/235** *(2006.01)*

(21) Application number: **07253006.6**

(22) Date of filing: **31.07.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU** | (72) Inventors:<br>• **Yamada, Tohru**<br>  **c/o Matsushita Electric Industrial Co., Ltd.**<br>  **Osaka-shi**<br>  **Osaka 540-6319 (JP)**<br>• **Teranishi, Nobukazu**<br>  **c/o Matsushita Electric Industrial Co., Ltd.**<br>  **Chuo-ku, Osaka-shi, Osaka 540-6319 (JP)** |
| (30) Priority: **08.08.2006 JP 2006215914** | |
| (71) Applicant: **MATSUSHITA ELECTRIC INDUSTRIAL CO., LTD.**<br>**Osaka 571-8501 (JP)** | (74) Representative: **Tomlinson, Kerry John**<br>**Frank B. Dehn & Co.**<br>**St Bride's House**<br>**10 Salisbury Square**<br>**London EC4Y 8JD (GB)** |

(54) **Imaging apparatus and endoscope apparatus using the same**

(57)     An imaging apparatus that can shoot a moving image and a still image includes: a CCD 1; an illumination light source 3 for illuminating a subject; and a controlling apparatus 10 for controlling the CCD 1 and the illumination light source 3. The CCD 1 includes: a plurality of photoelectric conversion parts that are arranged in matrix; and a vertical charge transfer part for reading out a charge that is accumulated in each of the photoelectric conversion parts, the controlling apparatus 10 allows the vertical charge transfer part to read out the charge in a state where the illumination light source 3 is ON at a time of shooting the moving image, and when an instruction for shooting the still image is provided, the controlling apparatus turns OFF the illumination light source 3 after completion of light exposure for obtaining the still image, allows the vertical charge transfer part to read out all of the charges by dividing the charges into a plurality of fields while the illumination light source 3 is OFF, and synthesizes the charges that are read out separately by the respective fields so as to generate one still image.

FIG. 1

EP 1 887 792 A2

**Description**

The present invention relates to an imaging apparatus that is provided with a solid-state imaging device such as a CCD (a charge coupled device) type imaging device or a MOS type imaging device, and particularly relates to an imaging apparatus that is provided with an auxiliary light source for enabling to shoot an image under an environment with an insufficient luminosity.

A solid-state imaging device such as a CCD type imaging device or a MOS type imaging device is utilized not only for a digital still camera or a camcorder, but also as an imaging device of an endoscope apparatus. Generally, an endoscope apparatus is used for shooting an image in a space where ambient light hardly reaches, such as an inside of a human body and an inside of a pipeline, and thus is provided with an illumination light source for irradiating the subject.

Moreover, since the space where an endoscope is used is narrow in most cases, it is necessary to decrease not only the size of a solid-state imaging device itself but also the whole size of an imaging apparatus including an illumination light source and a lens system, in order to decrease a dimension of the endoscope. Further, in recent years, in addition to a conventional tube type endoscope apparatus, a capsule type endoscope apparatus that shoots an image while moving alone inside a human body also has been developed, and a demand for decreasing the whole size of the imaging apparatus tends to be increased further in the future.

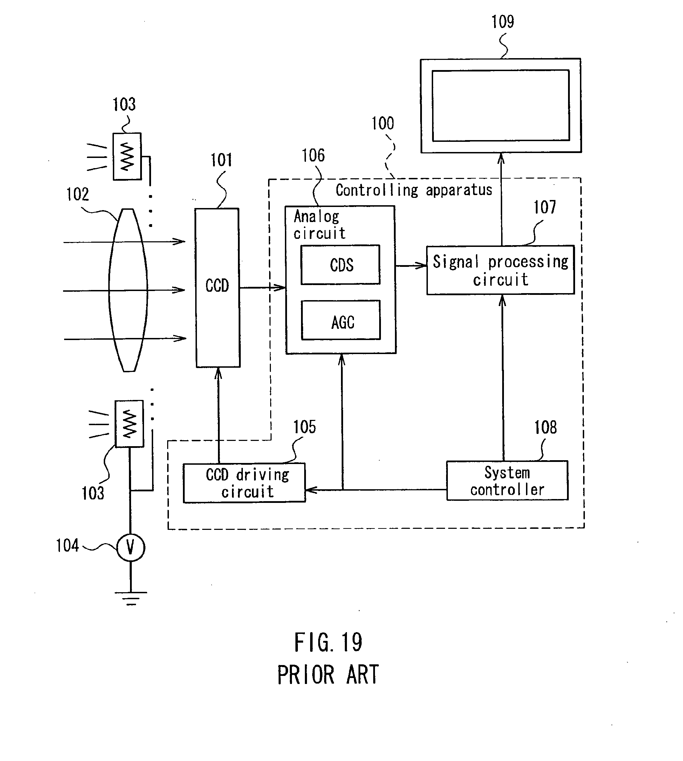

Herein, a structure of an imaging apparatus (Conventional Example 1) that is used for an endoscope apparatus will be described with reference to FIG. 19. FIG. 19 is a structural view schematically showing a structure of a conventional imaging apparatus that is provided with an illumination light source. In the example of FIG. 19, a CCD type imaging device (hereinafter, simply called a "CCD") 101 is used as the solid-state imaging device.

As shown in FIG. 19, the imaging apparatus of Conventional Example 1 is provided with the CCD 101, a controlling apparatus 100, an imaging lens system 102 for forming an image of a subject on a photoreceptive surface of the CCD 101, an illumination light source 103 for irradiating the subject and a display 109 for displaying the shot image. Reference numeral 104 denotes a power source for supplying an electric power to the illumination light source 103.

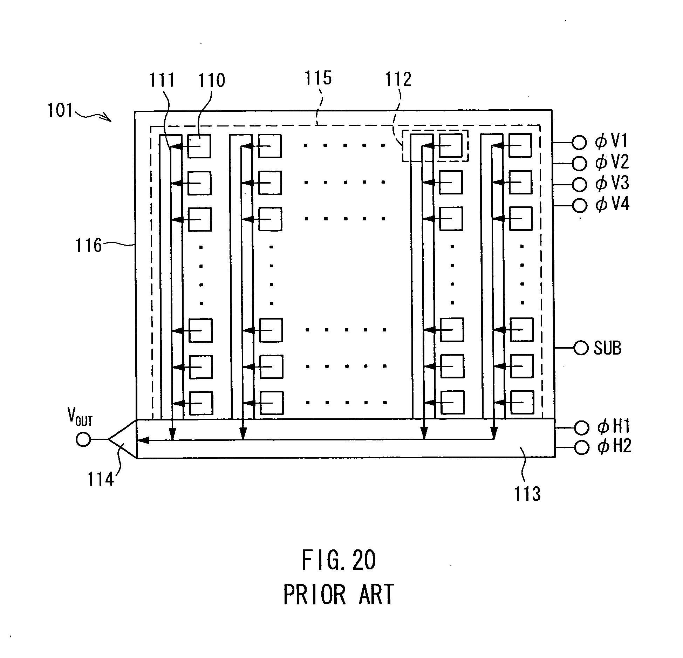

The controlling apparatus 100 is an apparatus for controlling an operation of the CCD 101, and mainly is provided with a CCD driving circuit 105, an analog circuit 106, a signal processing circuit 107 and a system controller 108. According to an instruction from the system controller 108, the CCD driving circuit 105 generates various pulses for driving a vertical charge transfer part and a horizontal charge transfer part (see FIG. 20) that are provided in the CCD 101, and supplies these pulses to the CCD 101. By the pulses supplied from the CCD driving circuit 105, the image is shot and the charge is transferred in the CCD 101. Moreover, an image signal that is output from the horizontal charge transfer part of the CCD 101 is input into an analog circuit 106.

The analog circuit 106 is provided with a correlated double sampling circuit (a CDS circuit), an automatic gain control circuit (an AGC circuit) and the like. The signal output from the CCD 101 is output to the signal processing circuit 107 after noise rejection by the CDS circuit, output adjustment by the AGC circuit and the like. The signal processing circuit 107 performs brightness signal processing, color signal processing, contour correction processing, encode processing and the like with respect to the output signal from the analog circuit 106. The system controller 108 outputs controlling signals to the CCD driving circuit 105, the analog circuit 106 and the signal processing circuit 107, respectively, and controls operation timings thereof with the controlling signals.

Next, a structure of the CCD 101 that is used in Conventional Example 1 will be described with reference to FIG. 20. FIG. 20 is a plan view showing a schematic structure of the CCD shown in FIG. 19. As shown in FIG. 20, the CCD 101 utilizes an interline transfer. The CCD 101 is provided with a photoelectric conversion part 110 for accumulating a charge according to the strength of incident light, a vertical charge transfer part 111, a horizontal charge transfer part 113 and a charge voltage conversion part (an output amplifier) 114.

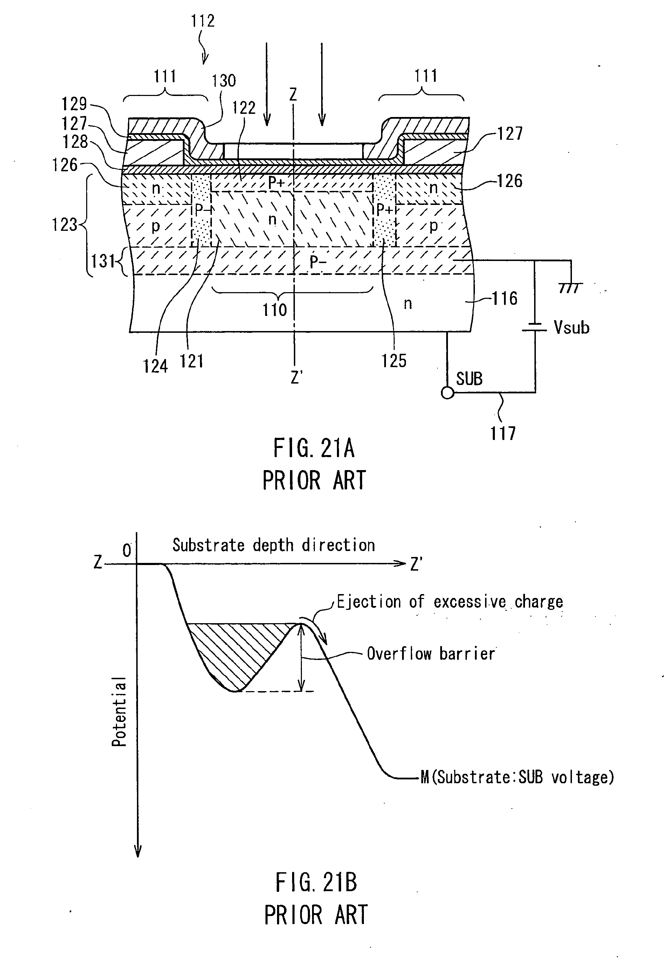

The photoelectric conversion part 110 is a photodiode that is provided on a semiconductor substrate 116, and a plurality of the photoelectric conversion parts 110 are provided (see FIG. 21). Moreover, the photoelectric conversion parts 110 are arranged in a matrix. The vertical charge transfer part 111 is provided in each column of the photoelectric conversion parts 110 in a vertical direction, reads out a charge that is accumulated in each of the photoelectric conversion parts 110, and transfers the charge in the vertical direction. The horizontal charge transfer part 113 transfers, in a horizontal direction, the signal charge that is transferred by the vertical charge transfer part 111.

Specifically, the vertical charge transfer part 111 has a channel region that is provided along the column of the photoelectric conversion parts 110 in the vertical direction on the semiconductor substrate 116, and a plurality of transfer electrodes (vertical transfer electrodes) that are provided as an upper layer on this channel region, which are not illustrated in FIG. 20 (see FIG. 21). The plurality of the vertical transfer electrodes are formed so as to cross the channel region, and are arranged along the vertical direction.

Moreover, in Conventional Example 1, the two vertical transfer electrodes are provided in one photoelectric conversion part 110. In Conventional Example 1, the one photoelectric conversion part 110, the two vertical transfer electrodes corresponding to this photoelectric conversion part 110, and a part of the channel region directly underneath these two vertical transfer electrodes constitute one pixel 112. The whole area where the pixels 112 are formed is an imaging area 115. Moreover, each of the plurality of the vertical transfer electrodes is connected to any of driving terminals ΦV1 to ΦV4 via a bus line wiring (not illustrated) that is provided around the imaging area 115. Specifically, the respective vertical transfer electrodes are connected to the driving terminals ΦV1, ΦV2, ΦV3 and ΦV4 in this order, from the top of the figure.

Thus, when the CCD driving circuit 105 (see FIG. 19) applies H-level read-out pulses to the driving terminals ΦV1 and ΦV3, the signal charge accumulated in the photoelectric conversion part 110 is read out to the vertical charge transfer part 111. Subsequently, the CCD driving circuit 105 applies M-level and L-level transfer pulses to the driving terminals ΦV1 to ΦV4, the signal charge that is read out is transferred in the vertical direction by the vertical charge transfer part 111.

Moreover, the horizontal charge transfer part 113 has a channel region that is provided along the horizontal direction on the semiconductor substrate 116, and a plurality of transfer electrodes (horizontal transfer electrodes) that are arranged along the horizontal direction (see FIG. 21). Each of the horizontal transfer electrodes is connected to either of driving terminals ΦH1 and ΦH2. Thus, when the CCD driving circuit 105 (see FIG. 19) applies H-level and L-level transfer pulses alternately to the driving terminals ΦH1 and ΦH2 so as to perform two-phase driving, the signal charge is transferred in the horizontal direction. As a result, the charge that is transferred from the vertical charge transfer part 111 to the horizontal charge transfer part 113 reaches the charge voltage conversion part 114.

The charge voltage conversion part 114 converts the charge that is transferred by the horizontal charge transfer part 113 into a voltage, and outputs the obtained voltage signal. This voltage signal is processed by the analog circuit 106 (see FIG. 19) and the signal processing circuit 107 (see FIG. 19) that are described above, thereby obtaining a shot image.

Moreover, as shown in FIG. 20, the CCD 101 is provided with a SUB terminal for controlling a substrate voltage. This is for ejecting a charge that is generated excessively in the photoelectric conversion part 110. This point will be described with reference to FIGs. 21A and 21B. FIG. 21A is a cross-sectional view showing a structure of the pixel of the CCD shown in FIGs. 19 and 20, and FIG. 21B is a view showing a potential distribution in a direction of a line Z-Z' shown in FIG. 21A.

As shown in FIG. 21A, the CCD has the N type semiconductor substrate (silicon substrate) 116. Moreover, on a surface layer side of the semiconductor substrate 116, a P-well 123 is formed. Further, in a region of the semiconductor substrate 116 where the P-well 123 is formed, an N type diffusion layer 121 that constitutes the photoelectric conversion part 110 is provided. The photoelectric conversion part 110 is a photodiode with an NPN structure that is constituted of this N type diffusion layer 121, the P-well 123 and the N type semiconductor substrate 116. On a surface layer of the diffusion layer 121, a $P^+$ type surface inversion layer 122 is formed so as to suppress generation of a dark current on a surface of the photoelectric conversion part 110.

The vertical charge transfer part 111 has an N type channel region (diffusion layer) 126 that is formed on the surface layer of the semiconductor substrate 116, and a transfer electrode 127. The transfer electrode 127 is provided at a position that is overlapped with the channel region 126 on the semiconductor substrate 116, via an insulation film 128. Moreover, the vertical charge transfer part 111 and a surface of the photoelectric conversion part 110 are covered with an interlayer insulation film 129 that covers a whole surface of the CCD. On an upper layer of the interlayer insulation film 129, a shade film 130, in which an opening is provided at a part that is overlapped with the photoelectric conversion position 110, also is formed.

Moreover, in the example of FIG. 21A, the two vertical charge transfer parts 111 are illustrated, and among them, the vertical charge transfer part 111 that is shown on a left side in the figure reads out the charge that is accumulated in the photoelectric conversion part 110. The vertical charge transfer part 111 that is shown on a right side in the figure reads out a charge of another photoelectric conversion part that is not illustrated in the figure. Thus, on the left side of the photoelectric conversion part 110 in the figure, a P type read-out part 124 is formed in order to read out the signal charge. Whereas, at a position around the photoelectric conversion part 110 where the read-out part 124 is not formed, a $P^+$ type element isolation part 125 for separating the charge in each pixel 112 is formed.

Moreover, as shown also in FIG. 20, the semiconductor substrate 116 is provided with the SUB terminal. Further, the imaging apparatus has a voltage supply circuit 117. The voltage supply circuit 117 applies a reverse bias voltage between a region of the semiconductor substrate 116 where the P-well 123 is not provided and the P-well 123, via this SUB terminal. By the application of this reverse bias voltage, the P-well 123 on a lower layer side of the photoelectric conversion part 110 is depleted. And, in each pixel 112, from a lower surface of the photoelectric conversion part 110 to a lower surface of the P-well 123, an overflow barrier (an OFB) is constituted.

Thus, when light is incident into the diffusion layer 121 that constitutes the photoelectric conversion part 110, the photoelectric conversion occurs at this part and the signal charge is accumulated, and the electric potential of the diffusion layer 121 is decreased. And, as shown in FIG. 21B, an excessive charge beyond a potential height of the overflow barrier is discharged to the substrate side via a path of the NPN. As a result, blooming that is generated due to the flow-out of the excessive signal charge to the vertical charge transfer part 111 and causes vertical stripes in the image is suppressed.

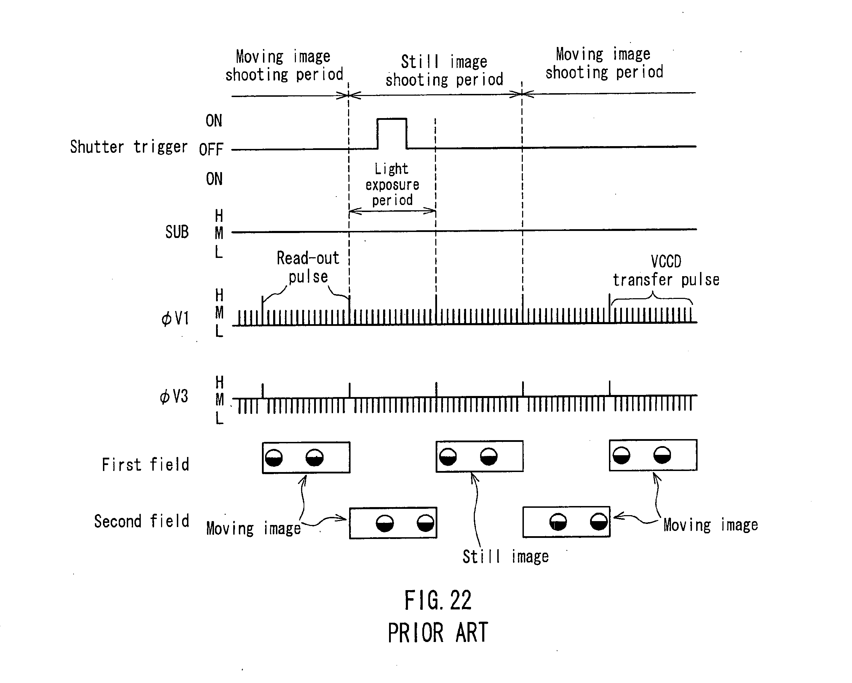

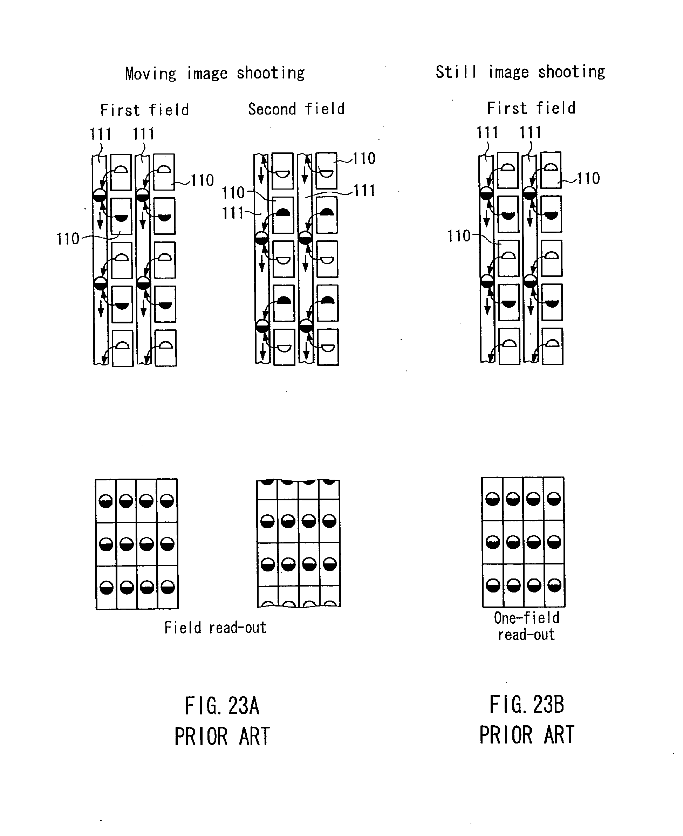

Next, an operation of the CCD 101 (see FIG. 20) will be described with reference to FIGs. 22 and 23. FIG. 22 is a timing chart showing pulses for driving the CCD shown in FIGs. 19 and 20. FIG. 23 is an explanatory view conceptually showing an operation of the CCD that is driven by the pulses shown in FIG. 22. FIG. 23A shows the operation thereof at a time of shooting a moving image, and FIG. 23B shows the operation thereof at a time of shooting a still image. Incidentally, in the below description, FIGs.19 and 20 will be referenced as appropriate.

In the example shown by FIGs. 22, 23A and 23B, the illumination light source 103 (see FIG. 19) is always ON while shooting an image. Moreover, as shown in FIG. 22, the CCD driving circuit 105 (see FIG. 19) applies H-level read-out pulses to the driving terminals ΦV1 and ΦV3 in each one field period (for example, 1/60 seconds). Thus, in each one field period, the charge that is accumulated in each of the photoelectric conversion parts 110 (see FIG. 20) is read out to the vertical charge transfer part (VCCD) 111 (see FIG. 20).

And, as shown in FIG. 23A, in the vertical charge transfer part 111, the signal charges of two pixels that are adjacent to each other in the vertical direction are added. Combinations of the adding of the signal charges of these vertical two pixels are varied between an odd field (a first field) and an even field (a second field), thereby achieving interlace scanning. Such a read-out system is known as a field read-out system. Moreover, in the field read-out system, an image sequence with an excellent dynamic resolution can be output by adding the signal charges of the vertical two pixels. Generally, the field read-out system often is used for shooting moving images.

Moreover, in any of the field periods, when a shutter button is pushed and a shutter trigger is input (ON), the field period becomes a light exposure period (1/60 seconds) for shooting a still image. And, as shown in FIG. 23B, an image of an odd field or an even field (one field) that is read out by application of a next read-out pulse is output as the still image.

As described above, in Conventional Example 1, the field period (the light exposure period) in which the shutter trigger becomes ON and a next field period in which the still image is output are a still image shooting period. Other field periods than these are moving image shooting periods, in which the images are output sequentially by varying the combinations of the adding of the charges. Moreover, in either of the moving image shooting period and the still image shooting period, the reverse bias voltage (a SUB voltage) that is applied to the SUB terminal of the CCD 101 is fixed at the M-level. Thus, the excess signal charge that is generated in the photoelectric conversion part 110 is ejected to the semiconductor substrate via the OFB.

As described above, when operating the CCD 101 by the field read-out system, both of a moving image and a still image can be shot. Further, during a moving image shooting, it also can be switched into a still image shooting. However, in the imaging apparatus described above, as shown in FIG. 23B, the still image also is an image of one field that is obtained by adding the signal charges of the vertical two pixels. Thus, in the above-described imaging apparatus, the still image with a vertical resolution that is only a half of the pixels in number is obtained, and it is difficult to obtain the still image with a high definition.

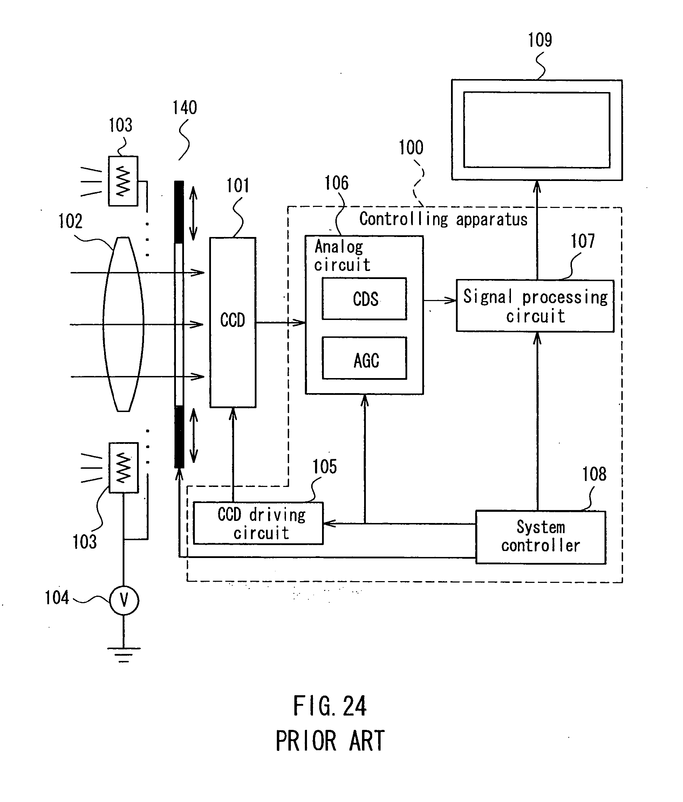

In order to solve such a problem, JP Patent No. 3440722 and JP 2004-328681 A suggest an imaging apparatus that has a light shielding member such as a mechanical shutter and shoots a still image by the frame read-out utilizing the light shielding member. The imaging apparatus that has the light shielding member (Conventional Example 2) will be described below with reference to FIGs. 24 to 26.

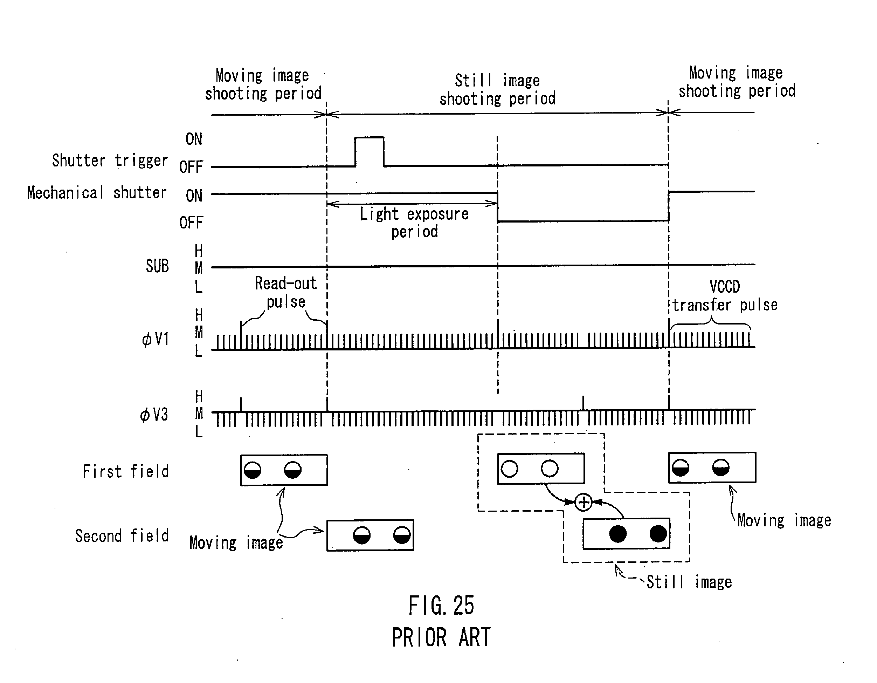

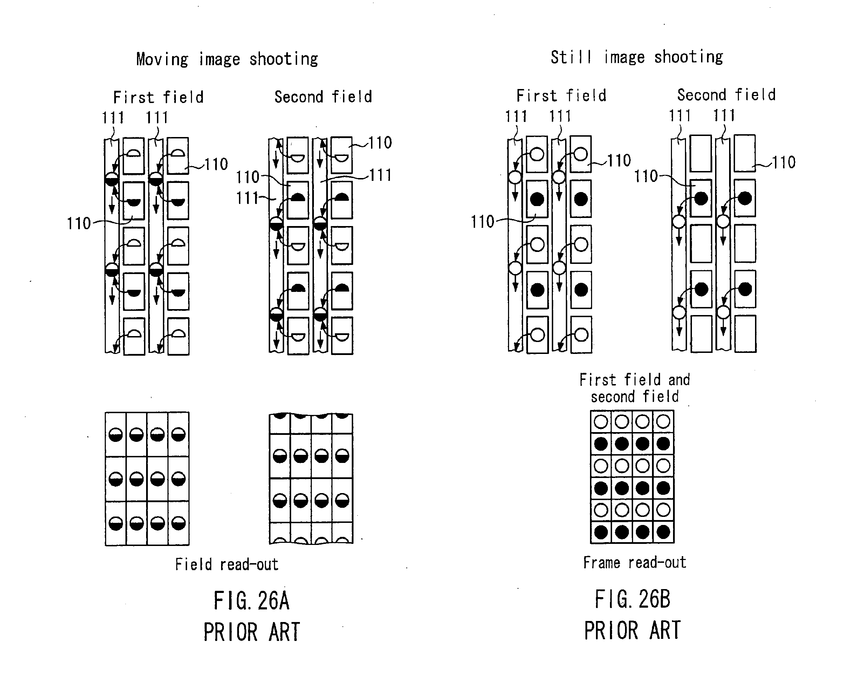

FIG. 24 is a structural view schematically showing the structure of a conventional imaging apparatus that has a mechanical shutter. FIG. 25 is a timing chart showing pulses for driving the CCD shown in FIG. 24. FIG. 26 is an explanatory view conceptually showing the operation of the CCD that is driven by the pulses shown in FIG. 25. FIG. 26A shows the operation thereof at a time of shooting a moving image, and FIG. 26B shows the operation at a time of shooting a still image.

As shown in FIG. 24, the imaging apparatus of Conventional Example 2 is structured similarly to the imaging apparatus of Conventional Example 1 except for a mechanical shutter 140 being provided between the imaging lens system 102 and the CCD 101. Moreover, also in Conventional Example 2, the field period (the light exposure period) in which the shutter trigger becomes ON and the next field period are the still image shooting period, and periods other than these are the moving image shooting periods. Further, as shown in FIG. 25, the mechanical shutter 140 is always open during the moving image shooting period, and does not shield light that is incident into the CCD 101 during the moving image shooting period.

Thus, as shown in FIGs. 25 and 26A, also in the imaging apparatus of Conventional Example 2, an image sequence is output by the field read-out system in the moving image shooting period, similarly to the imaging apparatus of Conventional Example 1.

Moreover, as shown in FIG. 25, the mechanical shutter 140 is closed in a field period that is next to the light exposure period, according to an instruction from the system controller 108. During this field period, light that has passed through the imaging lens system 102 cannot be incident onto the photoreceptive surface of the CCD 101, and is in a state where the photoelectric conversion is not permitted.

Further, as shown in FIG. 25, at a time of starting the field period that is next to the light exposure period, that is, at the same time when the mechanical shutter 140 is closed, a H-level read-out pulse is applied only to the driving terminal ΦV1. Then, the charge that is read out is transferred in the vertical direction. Moreover, after completion of this transfer, a H-level read-out pulse is then applied only to the driving terminal ΦV3, and the charge that is read out also is transferred in the vertical direction.

Thus, as shown in FIG. 26B, in the first field, charges that are accumulated in pixel columns in odd rows are read out without being mixed. Subsequently, in the second field, signal charges that are accumulated in pixel columns in even rows are read out without being mixed. Then, the thus obtained images of the two fields are synthesized by the signal processing circuit (see FIGs. 19 and 24) 107, thereby forming one frame image. Incidentally, such a read-out system is known as a frame read-out system.

As described above, in the still image shooting period of Conventional Example 2, the charges accumulated in the pixels are divided into the two fields, are read out separately by each field, and subsequently, the images of the two fields are synthesized into a frame image. Moreover, at this time, the signal charges of the two pixels that are adjacent to each other in the vertical direction are not added. Thus, according to Conventional Example 2, a vertical resolution of a still image can be higher than that of Conventional Example 1.

Moreover, in Conventional Example 2, after the light exposure period has passed, the CCD 101 is shielded by the mechanical shutter 140. Thus, the photoelectric conversion is performed at the same timing and for the same period of the time, between in the photoelectric conversion part in the pixel column in the odd row and in the photoelectric conversion part in the pixel column in the even row. Thus, even in a case of shooting a moving subject, no positional displacement or time lag of the subject is generated between the image of the first field and the image of the second field, and the still image with a small step difference between the fields can be obtained.

As described above, when using the mechanical shutter and shooting a still image by the frame read-out system, the still image with the high imaging resolution can be obtained. However, in order to mount the mechanical shutter, a space for mounting the mechanical shutter itself and the driving apparatus for driving the mechanical shutter are necessary.

Thus, in the case of applying the imaging apparatus of Conventional Example 2 to an endoscope, a problem of increasing the size of the endoscope occurs, and it becomes difficult to satisfy the demand for decreasing the size. It is easy to mount the mechanical shutter in an apparatus having a size that is larger than the endoscope, such as a digital still camera and a camcorder, but it is difficult to mount it in an endoscope apparatus.

Moreover, the mechanical shutter has a mechanical structure, in which a structural failure is likely to occur. On the other hand, it is required that a failure occurs as little as possible, particularly for a medical endoscope apparatus that is used inside a body, in order to secure the reliability.

It is an object of the present invention to solve the problems described above, and to provide an imaging apparatus that can improve a resolution of a still image without having a light shielding member such as a mechanical shutter, and an endoscope apparatus using the same.

In order to attain the object described above, the imaging apparatus of the present invention is an imaging apparatus that can shoot a moving image and a still image, the imaging apparatus including: a solid-state imaging device; an illumination light source for illuminating a subject; and a controlling apparatus for controlling the solid-state imaging device and the illumination light source, wherein the solid-state imaging device includes: a plurality of photoelectric conversion parts that are arranged in matrix; and a read-out part for reading out a charge that is accumulated in each of the photoelectric conversion parts. The controlling apparatus allows the read-out part to read out the charge in a state where the illumination light source is ON at a time of shooting the moving image. When an instruction for shooting the still image is provided, the controlling apparatus turns OFF the illumination light source after completion of light exposure for obtaining the still image, allows the read-out part to read out all of the charges by dividing the charges into a plurality of fields while the illumination light source is OFF, and synthesizes the charges that are read out separately by the respective fields so as to generate one still image.

Moreover, in order to attain the object described above, the endoscope apparatus of the present invention is an endoscope apparatus including an imaging apparatus that can shoot a moving image and a still image, wherein the imaging apparatus includes: a solid-state imaging device; an illumination light source for illuminating a subject; and a controlling apparatus for controlling the solid-state imaging device and the illumination light source, the solid-state imaging device includes: a plurality of photoelectric conversion parts that are arranged in matrix; and a read-out part for reading out a charge that is accumulated in each of the photoelectric conversion parts. The controlling apparatus allows the read-out part to read out the charge in a state where the illumination light source is ON at a time of shooting the moving image. When an instruction for shooting the still image is provided, the controlling apparatus turns OFF the illumination light source after completion of light exposure for obtaining the still image, allows the read-out part to read out all of the charges by dividing the charges into a plurality of fields while the illumination light source is OFF, and synthesizes the charges that are read out separately by the respective fields so as to generate one still image.

As described above, in the present invention, after the completion of the light exposure for obtaining the still image, the illumination light source is turned OFF, thereby suppressing light incidence into the solid-state imaging device. Thus, according to the imaging apparatus of the present invention and the endoscope apparatus having the same, frame read-out can be achieved without having a light shielding member such as a mechanical shutter, and as a result, a resolution of the still image can be improved.

In the imaging apparatus and the endoscope apparatus of the present invention, the controlling apparatus can allow the read-out part to perform field read-out for adding the charges of the two or more photoelectric conversion parts that are arranged in a vertical direction, at the time of shooting the moving image. In this case, a smooth output of the moving image can be obtained.

Moreover, in the imaging apparatus and the endoscope apparatus of the present invention, the controlling apparatus also can allow the read-out part to read out only a charge accumulated in a part of the photoelectric conversion parts among the plurality of the photoelectric conversion parts, at the time of shooting the moving image. In this case, it is effective when the subject to be shot is moving actively.

In the imaging apparatus and the endoscope apparatus of the present invention, it is preferable that the photoelectric conversion part is formed on a semiconductor substrate, and the solid-state imaging device has an overflow barrier for adjusting an amount of the charge that is accumulated in the photoelectric conversion part. According to this case, by adjusting a potential height of the overflow barrier, the amount of the charge that is accumulated in the photoelectric conversion part can be adjusted.

Moreover, in the above-described case, it is preferable that the controlling apparatus applies, to the semiconductor substrate, an electronic shutter pulse for ejecting the charge after the instruction for shooting the still image is provided, thereby controlling the length of time of the light exposure for obtaining the still image. In this case, the length of the time of the light exposure for obtaining the still image can be adjusted easily, thereby setting the exposure time with a high precision.

Further, in the above-described case, it is preferable that the controlling apparatus allows a potential height of the overflow barrier to be higher than a potential height at the time of shooting the moving image, after the instruction for shooting the still image is provided and until the read-out of the charge of each of the fields is completed. In this case, the sensitivity at the time of shooting the still image can be improved.

Further, in the above-described case, it is preferable that the solid-state imaging device is an interline transfer type solid-state imaging device, the read-out part is provided in each column of the plurality of the photoelectric conversion parts in the vertical direction, and includes a plurality of charge transfer apparatuses for transferring, in the vertical direction, the charge that is read out, the controlling apparatus allows the plurality of the charge transfer apparatuses respectively to perform field read-out for adding the charges of the $N$ photoelectric conversion parts (N represents the number of the photoelectric conversion parts) that are arranged in the vertical direction, at the time of shooting the moving image, when a maximum transfer charge amount of each of the plurality of the charge transfer apparatuses is $S_{VCCD}$, the potential height of the overflow barrier at the time of shooting the moving image is set such that a maximum accumulated charge amount $S_{motion}$ of each of the plurality of the photoelectric conversion parts at the time of shooting the moving image satisfies a below formula (1), the potential height of the overflow barrier after the instruction for shooting the still image is provided and until the read-out of the charge of each of the fields is completed is set such that a maximum accumulated charge amount $S_{still}$ of each of the plurality of the photoelectric conversion parts at the time of shooting the still image satisfies a below formula (2). Thereby, generation of blooming can be suppressed.

$$S_{VCCD} \geq N \times S_{motion} \qquad (1)$$

$$S_{VCCD} \geq S_{still} \qquad (2)$$

Moreover, in the above-described case, it is preferable that the controlling apparatus turns OFF the illumination light source and then allows the potential height of the overflow barrier to be higher than a potential height at the time of shooting the moving image, and subsequently, allows the read-out part to read out all of the charges by dividing the charges into the plurality of the fields. Thereby, while reading out a charge in an initial field, ejection of a charge that is to be read out in a subsequent field can be suppressed, and generation of an output signal step difference between the fields can be prevented.

In the imaging apparatus and the endoscope apparatus of the present invention, it is preferable that the solid-state imaging device is an interline transfer type solid-state imaging device, the read-out part is provided in each column of the plurality of the photoelectric conversion parts in the vertical direction, and includes a plurality of charge transfer apparatuses for transferring in the vertical direction the charge that is read out, and the controlling apparatus turns OFF the illumination light source, then respectively applies to the plurality of the charge transfer apparatuses, sweeping-out pulses for ejecting the charges that are accumulated in the charge transfer apparatuses, and subsequently, allows the read-out part to read out all of the charges by dividing the charges into the plurality of the fields. In this case, only the signal charge can be extracted by removing an unwanted charge, and a S/N ratio of the output signal can be improved, thereby improving the image quality of the shot image. Also, the generation of the step difference between the fields of the output signals, which is caused by a difference between amounts of the unwanted charges generated in the respective fields, can be suppressed.

These and other advantages of the present invention will become apparent to those skilled in the art upon reading and understanding the following detailed description with reference to the accompanying figures.

FIG. 1 is a structural view schematically showing a structure of an imaging apparatus according to Embodiment 1 of the present invention.

FIG. 2 is a timing chart showing pulses for driving a CCD that is provided in the imaging apparatus shown in FIG. 1.

FIG. 3 is a view showing a signal arrangement in a case where a solid-state imaging device is provided with a color filter in Embodiment 1 of the present invention, FIG. 3A shows the signal arrangement at a time of shooting a moving image, and FIG. 3B shows the signal arrangement at a time of shooting a still image.

FIG. 4 is a structural view schematically showing a structure of an endoscope apparatus according to Embodiment 1 of the present invention.

FIG. 5 is an explanatory view conceptually showing an operation of a solid-state imaging device that constitutes an imaging apparatus according to Embodiment 2 of the present invention. FIG. 5A shows the operation thereof at a time of shooting a moving image, and FIG. 5B shows the operation thereof at a time of shooting a still image.

FIG. 6 is a view showing a signal arrangement in a case where a solid-state imaging device is provided with a color filter in Embodiment 2 of the present invention. FIG. 6A shows the signal arrangement at a time of shooting a moving image, and FIG. 6B shows the signal arrangement at a time of shooting a still image.

FIG. 7 is an explanatory view conceptually showing an operation of a solid-state imaging device that constitutes an imaging apparatus according to Embodiment 3 of the present invention. FIG. 7A shows the operation thereof at a time of shooting a moving image, and FIG. 7B shows the operation thereof at a time of shooting a still image.

FIG. 8 is a view showing a signal arrangement in a case where a solid-state imaging device is provided with a color filter in Embodiment 3 of the present invention. FIG. 8A shows the signal arrangement at a time of shooting a moving image, and FIG. 8B shows the signal arrangement at a time of shooting a still image.

FIG. 9 is a timing chart showing pulses for driving a solid-state imaging device that is used in Embodiment 4 of the present invention.

FIG. 10 is a view showing a potential distribution in a thickness direction of the solid-state imaging device that is used in Embodiment 4 of the present invention.

FIG. 11 is a timing chart showing pulses for driving a solid-state imaging device that is used in Embodiment 5 of the present invention.

FIG. 12 is a view showing a potential distribution in a thickness direction of the solid-state imaging device that is used in Embodiment 5 of the present invention.

FIG. 13 is a view showing a maximum accumulated charge amount with the potential distribution.

FIG. 14 is a timing chart showing pulses for driving a solid-state imaging device that is used in Embodiment 6 of the present invention.

FIG. 15 is a view showing a potential distribution in a thickness direction of the solid-state imaging device that is used in Embodiment 6 of the present invention. FIG. 15A shows a case of setting a reverse bias voltage to be constant at a time of reading out a still image, and FIG. 15B shows a case of modulating the reverse bias voltage at a time of reading out the still image.

FIG. 16 is a timing chart showing pulses for driving a solid-state imaging device that is used in Embodiment 7 of the present invention.

FIG. 17 is an explanatory view showing a state of applying a high-speed sweep-out pulse to a vertical charge transfer part, and FIGs. 17A to 17C show a sequence of main steps.

FIG. 18 is an explanatory view showing the state of applying the high-speed sweep-out pulse to the vertical charge transfer part, and FIGs. 18A to 18C show a sequence of main steps that are subsequent to FIG. 17C.

FIG. 19 is a structural view schematically showing a structure of a conventional imaging apparatus that is provided with an illumination light source.

FIG. 20 is a plan view showing a schematic structure of the CCD shown in FIG. 19.

FIG. 21A is a cross-sectional view showing a structure of a pixel of the CCD shown in FIGs. 19 and 20, and FIG. 21B is a view showing a potential distribution in a direction of a line Z-Z' shown in FIG. 21A.

FIG. 22 is a timing chart showing pulses for driving the CCD shown in FIGs. 19 and 20.

FIG. 23 is an explanatory view conceptually showing an operation of the CCD that is driven by the pulses shown in FIG. 22. FIG. 23A shows the operation thereof at a time of shooting a moving image, and FIG. 23B shows the operation thereof at a time of shooting a still image.

FIG. 24 is a structural view schematically showing a structure of a conventional imaging device that is provided with a mechanical shutter.

FIG. 25 is a timing chart showing pulses for driving the CCD shown in FIG. 24.

FIG. 26 is an explanatory view conceptually showing an operation of the CCD that is driven by the pulses shown in FIG. 25. FIG. 26A shows the operation thereof at a time of shooting a moving image, and FIG. 26B shows the operation thereof at a time of shooting a still image.

(Embodiment 1)

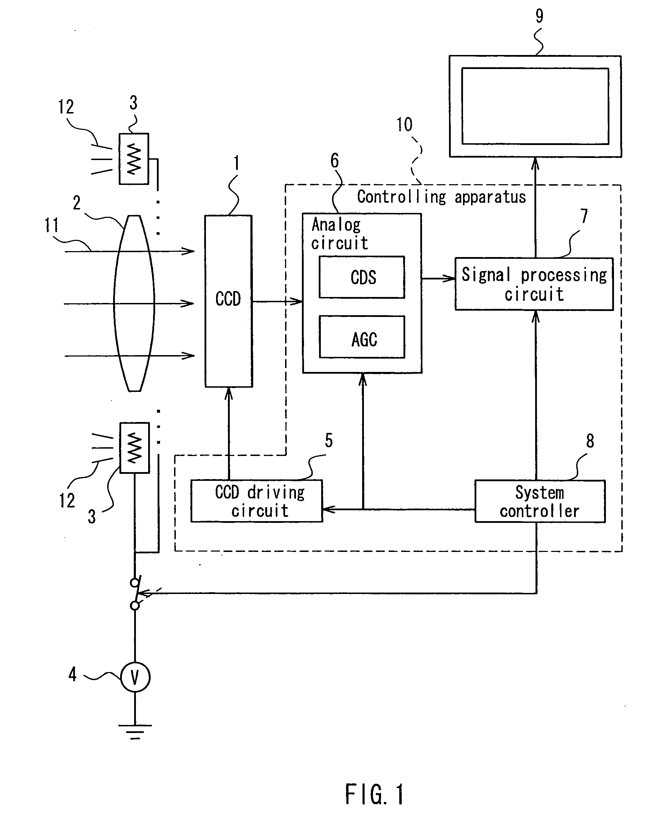

An imaging apparatus and an endoscope apparatus according to Embodiment 1 of the present invention will be described below with reference to FIGs. 1 to 4. Firstly, a structure of the imaging apparatus according to Embodiment 1 will be described with reference to FIG. 1. FIG. 1 is a structural view schematically showing the structure of the imaging apparatus according to Embodiment 1 of the present invention.

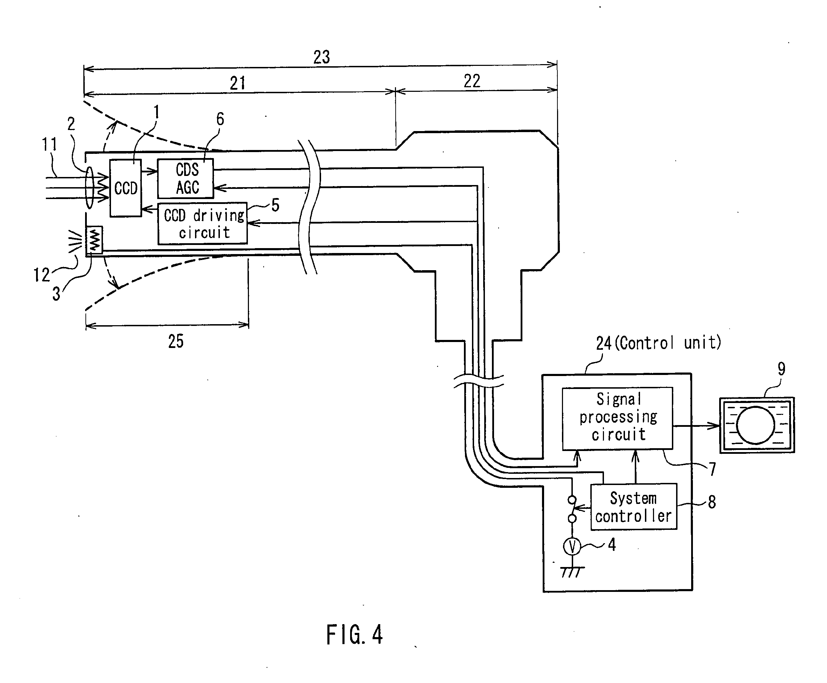

The imaging apparatus according to Embodiment 1 constitutes a part of the endoscope apparatus (see. FIG. 4), and shoots a moving image and a still image in a dark space where external light hardly reaches, similarly to the imaging apparatus of Conventional Example 1 shown in FIG. 19. Also in Embodiment 1, similarly to Conventional Example 1, a CCD type imaging device (CCD) 1 of an interline transfer type is used as the solid-state imaging device.

Specifically, as shown in FIG. 1, the imaging apparatus of Embodiment 1 is provided with the CCD 1, a controlling apparatus 10, an imaging lens system 2, an illumination light source 3 and a display 9, similarly to the imaging apparatus of Conventional Example 1. The controlling apparatus 10 is provided with a CCD driving circuit 5, an analog circuit 6, a signal processing circuit 7 and a system controller 8. Reference numeral 4 denotes a power source for supplying an electric power to the illumination light source 3. Incidentally, reference numeral 11 denotes incident light that is incident onto the CCD 1 via the imaging lens system 2, and reference numeral 12 denotes illumination light that is emitted from the illumination light source 3.

Moreover, the CCD 1 is similar to the CCD 101 that is shown in FIG. 20. Similarly to the conventional CCD 101, the CCD 1 is provided with a plurality of photoelectric conversion parts that are arranged in matrix, a vertical charge transfer part and a horizontal charge transfer part, which are not illustrated in FIG. 1. The vertical charge transfer part is provided with a channel region that is provided along a column of the photoelectric conversion parts in a vertical direction on a semiconductor substrate, and a plurality of transfer electrodes (vertical transfer electrodes) (see FIG. 21). The horizontal charge transfer part is provided with a channel region that is provided along the horizontal direction on the semiconductor substrate, and a plurality of transfer electrodes (horizontal transfer electrodes) (see FIG. 21).

Moreover, each of the vertical transfer electrodes is connected to any of driving terminals ΦV1 to ΦV4 via a bus line wiring (not illustrated) that is provided around an imaging area. The vertical charge transfer part functions as a read-out part for reading out a signal charge that is accumulated in the photoelectric conversion part, when H (high)-level read-out pulses are applied to the driving terminals ΦV1 and ΦV3. Further, the vertical charge transfer part transfers, in the vertical direction, the signal charge that is read out, when M (middle)-level and L (low)-level transfer pulses are applied to the driving terminals ΦV1 to ΦV4. Moreover, each of the horizontal transfer electrodes is connected to any of driving terminals ΦH1 and ΦH2. The horizontal charge transfer part transfers the signal charge in the horizontal direction, when H (high)-level and L (low)-level transfer pulses are applied alternately to the driving terminals ΦH1 and ΦH2.

Moreover, the photoelectric conversion part of the CCD 1 is structured similarly to the photoelectric conversion part of the conventional CCD 101 (see FIG. 21). That is, the semiconductor substrate constituting the CCD 1 is an N type silicon substrate. Moreover, a P-well is formed on a surface layer side of the semiconductor substrate, and an N type diffusion layer is provided in a region of the semiconductor substrate where the P-well is formed. The photoelectric Conversion part is a photodiode with an NPN structure that is constituted of the N type diffusion layer, the P-well and the N type semiconductor substrate.

Further, also in Embodiment 1, the CCD 1 is provided with a SUB terminal for applying a reverse bias voltage between a region of the semiconductor substrate where the P-well is not formed and the P-well (see FIG. 21), similarly to the conventional CCD 101. The reverse bias voltage is applied by a voltage supply circuit (see FIG. 21A) according to an instruction from the system controller 8.

As described above, the imaging apparatus of Embodiment 1 has a structure that is similar to the imaging apparatus of Conventional Example 1. Also in Embodiment 1, similarly to Conventional Examples 1 and 2, the controlling apparatus 10 allows the vertical charge transfer part to perform field read-out for adding the charges of the two or more photoelectric conversion parts that are arranged in the vertical direction, thereby shooting a moving image.

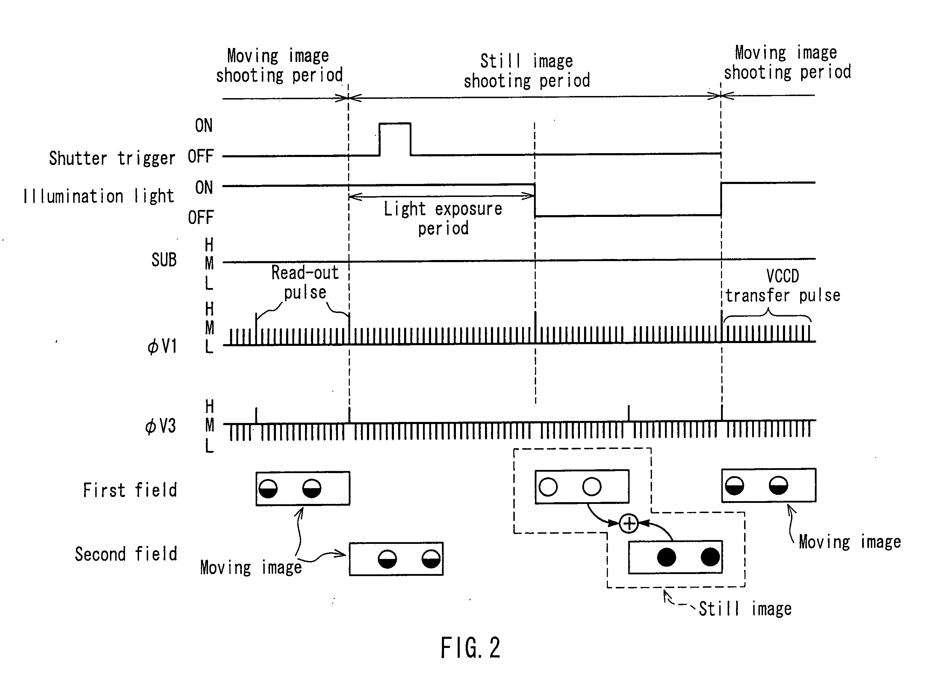

It should be noted that the imaging apparatus of Embodiment 1 is distinctive from the imaging apparatus of Conventional Example 1 in a point that timings of turning the illumination light source 3 ON and OFF are controlled by the system controller 8. Moreover, the imaging apparatus of Embodiment 1 can shoot a still image by the frame read-out system, in spite of having no mechanical shutter unlike the imaging apparatus of Conventional Example 2. This point will be described below specifically with reference to FIG. 2. FIG. 2 is a timing chart showing pulses for driving the CCD that is provided in the imaging apparatus shown in FIG. 1.

As shown in FIG. 2, also in Embodiment 1, the illumination light source 3 is ON during the moving image shooting period, similarly to Conventional Examples 1 and 2. And, the CCD driving circuit 5 (see FIG. 1) applies H-level read-out pulses to the driving terminals ΦV1 and ΦV3 in each one field period (for example, 1/60 seconds), and allows the vertical charge transfer part to read out the charge that is accumulated in each of the photoelectric conversion parts. Moreover, the vertical charge transfer part adds the signal charges of the two pixels that are adjacent to each other in the vertical direction (see FIG. 23A). Combinations of the adding can be varied between an odd field (a first field) and an even field (a second field).

Whereas, when a shutter trigger is input (ON), the field period thereof becomes a light exposure period (for example, 1/30 seconds) similarly to Conventional Examples 1 and 2. In Embodiment 1, the illumination light source 3 is turned OFF by the system controller 8 after termination of the light exposure period. Moreover, the imaging apparatus of Embodiment 1 constitutes a part of the endoscope apparatus, and is used for shooting an image in a dark space. Thus, by turning OFF the illumination light source 3, the incident light 11 hardly is incident onto the CCD 1 via the imaging lens system 2. Further, this state is substantially the same as the state where the mechanical shutter is closed in Conventional Example 2.

And, as shown in FIG. 2, the system controller 8 allows the vertical charge transfer part to read out all of the charges that are accumulated in the photoelectric conversion parts by dividing the charges into a plurality of fields (two fields in Embodiment 1) while the illumination light source 3 is OFF. Further, the system controller 8 allows the signal processing circuit 7 to synthesize images that are obtained by the respective fields so as to form one frame image.

Specifically, at the same time of turning OFF the illumination light source 3, the CCD driving circuit 5 applies a H-level read-out pulse to the driving terminal ΦV1 according to an instruction from the system controller 8. Subsequently, the CCD driving circuit 5 applies M-level and L-level transfer pulses to the driving terminals ΦV1 to ΦV4, and transfers in the vertical direction the charges that are read out. Moreover, after completion of this transfer, the CCD driving circuit 5 then applies a H-level read-out pulse to the driving terminal ΦV3. And, the CCD driving circuit 5 also transfers the charges that are read out at this time in the vertical direction.

As a result, also in Embodiment 1, similarly to Conventional Example 2, charges accumulated in pixel columns in odd rows and charges accumulated in pixel columns in even rows are read out without being mixed (see FIG. 26B), and the shooting of the still image by the frame read-out system is completed. As described above, in Embodiment 1, unlike Conventional Example 2, the shooting of the still image by the frame read-out system is accomplished, by turning OFF the illumination light source 3. Moreover, as a result, since a light shielding member such as a mechanical shutter is not necessary, both of a decrease in size of the imaging apparatus and an increase of a resolution of the still image can be achieved at the same time.

Moreover, in Embodiment 1, similarly to Conventional Examples 1 and 2, a reverse bias voltage (a substrate voltage) that is applied to the SUB terminal of the CCD 1 is fixed at the M-level, and a charge beyond a certain amount is ejected to the semiconductor substrate via an OFB region, in either of the moving image shooting period and the still image shooting period.

Moreover, in the light of improving image quality of the still image, an environment for using the imaging apparatus preferably has a luminosity of about 10 lux or less while the illumination light source is OFF. Specifically, insides of a human body, another animal body, a pipeline and the like are exemplified.

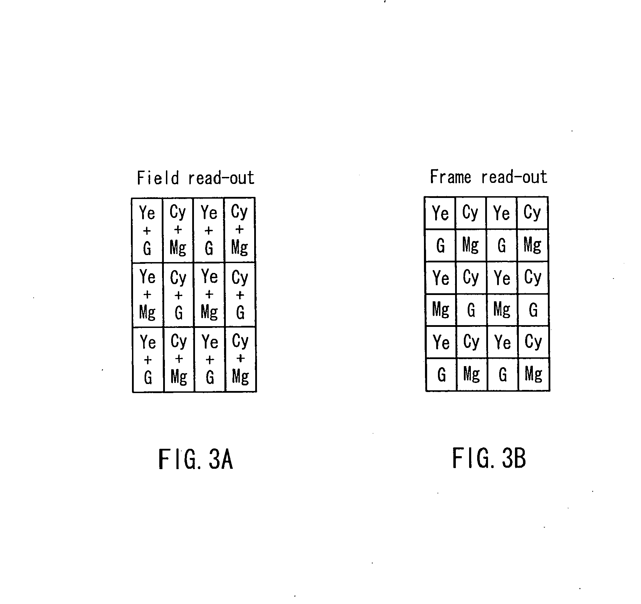

Further, in Embodiment 1, in order to obtain a color moving image and a color still image, the CCD 1 can be provided with a color filter. FIG. 3 is a view showing a signal arrangement in a case where a solid-state imaging device is provided with a color filter in Embodiment 1 of the present invention. FIG. 3A shows the signal arrangement at a time of shooting a moving image, and FIG. 3B shows the signal arrangement at a time of shooting a still image.

As shown in FIG. 3, in Embodiment 1, complementary color filters of yellow (Ye), cyan (Cy), magenta (Mg) and green (G) are formed in a color-difference sequential arrangement. Thus, as shown in FIG. 3A, at the time of shooting the moving image, complementary color signals of the vertical two pixels are added and are read out by the field read-out system, thus obtaining the moving image of 60 fields per second. Moreover, as shown in FIG. 3B, at the time of shooting the still image, the complementary color signals of all of the pixels are read out independently by the frame read-out system, thereby obtaining the still image with a high resolution.

Incidentally, the reason for using the complementary color filters in the present embodiment is as follows. In the case of using primary color filters, if adding signals of vertical two pixels (for example, R+G or B+G), original primary color signals cannot be recovered in signal processing in a later step. Thus, in the case of using the primary color filters, all of the pixels generally are read out independently. Whereas, in the case of using the complementary color filters, even if the signals of the vertical two pixels are added and are read out, primary color signals approximately can be introduced by performing the below-described color-difference signal processing in the later step.

When a brightness signal Y is approximated by the following formula (3), color-difference signals (R - Y) and (B - Y) are approximated as shown by formulae (4) and (5).

$$Y = \{(G + Cy) + (Mg + Ye)\} \times 1/2 \qquad (3)$$

$$R - Y = \{(Mg + Ye) - (G + Cy)\} = 2R - G \qquad (4)$$

$$B - Y = \{(Mg + Cy) - (G + Ye)\} = 2B - G \qquad (5)$$

From these formulae (3) to (5), the primary color signals R, G and B are approximated by the below formulae (6) to (8). Herein, below-described n, m, p and q are coefficients.

$$G = Y - (R - Y) - (B - Y) \qquad (6)$$

$$R = n(R - Y) + m\{Y - (B - Y)\} \qquad (7)$$

$$B = p(B - Y) + q\{Y - (R - Y)\} \qquad (8)$$

As described above, the complementary color filters that do not lose color information even when adding the charges of the vertical two pixels can increase a sensitivity twice by the signal adding, and are more advantageous for shooting a moving image in a dark space than the primary color filters, thus being used preferably for a camcorder, an endoscope and the like. However, it should be noted that, in a structure using the complementary color filters, since the primary color signals are introduced approximately by calculating the complementary color signals, it has a drawback that color reproducibility is lower than that in the case of reading out all of the pixels independently by using the primary color filters. Thus, in the case where the color reproducibility is required to be prioritized to the sensitivity, a CCD provided with the primary color filter is used generally.

Next, the endoscope apparatus according to Embodiment 1 will be described with reference to FIG. 4. FIG. 4 is a structural view schematically showing a structure of the endoscope apparatus according to Embodiment 1 of the present invention. As shown in FIG. 4, the endoscope apparatus according to Embodiment 1 is a tube type endoscope apparatus. The endoscope apparatus is constituted of a camera unit 23 for shooting a video image, a control unit 24 for controlling the camera unit 23 and performing various signal processing, and the display 9.

The camera unit 23 is provided with an insertion part 21 that is inserted into an inside of a human body, an inside of a pipeline or the like, and an operation part 22. The insertion part 21 has a tube-shape, and is provided with the CCD 1 constituting the imaging apparatus, the imaging lens system 2 and the illumination light source 3 on its tip. Moreover, the tip of the insertion part 21 is bendable, and constitutes a bending part 25. Specifically, inside the insertion part 21, a wire for transmitting a motive power for bending, an actuator (not illustrated) for generating the motive power for bending and the like are mounted.

Further, the operation part 22 is provided with a dial for pulling the wire, a button for operating the actuator and the like, and an operator controls the bending of the insertion part 21 via the operation part 22. Beside these, a forceps for performing treatment, collecting tissues and the like, a nozzle for spouting a medicament and air, and the like may be mounted on the tip of the insertion part 21. In this case, these operations also are performed via the operation part 22.

Moreover, in the control unit 24, a remaining part of the imaging apparatus, that is, the signal processing circuit 7, the power source 4 of the illumination light source 3 and the system controller 8 are mounted. Thus, a video image (a moving image and a still image) that is shot by the camera unit 23 and is subjected to the signal processing by the control unit 24 is displayed on the display 9.

As described above, the endoscope apparatus of Embodiment 1 is provided with the imaging apparatus of Embodiment 1 shown in FIG. 1 in the inside thereof. Thus, it is possible to shoot a still image with the frame read-out system without having a mechanical shutter or the like.

Therefore, according to the endoscope apparatus of Embodiment 1, while an increase of a size of the apparatus is suppressed, the probabilities of discovering diseases and failures can be enhanced by the increase of the resolution of the still image.

(Embodiment 2)

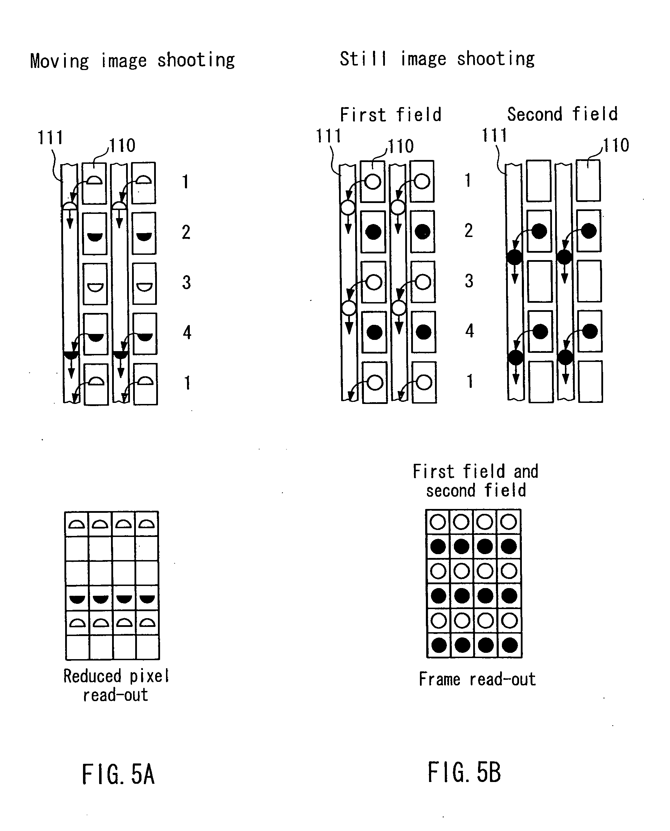

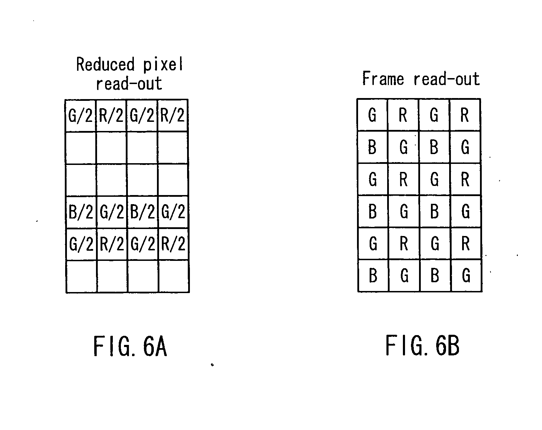

Next, an imaging apparatus and an endoscope apparatus according to Embodiment 2 of the present invention will be described with reference to FIGs. 5 and 6. FIG. 5 is an explanatory view conceptually showing an operation of a solid-state imaging device that constitutes the imaging apparatus according to Embodiment 2 of the present invention. FIG. 5A shows the operation thereof at a time of shooting a moving image, and FIG. 5B shows the operation thereof at a time of shooting a still image.

The imaging apparatus of Embodiment 2 is distinctive from the imaging apparatus of Embodiment 1 shown in FIG. 1 in the processing that is performed inside the apparatus at a time of shooting a moving image. Except for this point, the imaging apparatus of Embodiment 2 is similar to the imaging apparatus of Embodiment 1 shown in FIG. 1. Moreover, the endoscope apparatus of Embodiment 2 has a structure that is similar to the endoscope apparatus of Embodiment 1 shown in FIG. 4. The distinctive point from Embodiment 1 will be described below.

As shown in FIG. 5A, in Embodiment 2, the controlling apparatus allows the vertical charge transfer part 111 (see FIG. 20) to read out only a charge accumulated in a part of the photoelectric conversion parts 110 (see FIG. 20) among the plurality of the photoelectric conversion parts 110, at the time of shooting a moving image. That is, the system controller (see FIG. 1) provides an instruction to the CCD driving circuit (see FIG. 1) after photoelectric conversion for one field period (for example, 1/60), and allows the vertical charge transfer part 111 to read out the charges accumulated in the photoelectric conversion parts 110 in pixel rows that are omitted in part.

Specifically, according to the instruction from the system controller, the CCD driving circuit applies read-out pulses only to a first pixel row and a fourth pixel row from the top, where four pixel rows constitute one group, for example. Thereby, only charges that are accumulated in the photoelectric conversion parts 110 in the first pixel row and the fourth pixel row are read out by the respective vertical charge transfer parts 111.

Thus, according to Embodiment 2, since only two pixel rows per four pixel rows are read out and the rest two pixel rows are omitted, a resolution of the moving image in the vertical direction is reduced by half. Thereby, the moving image, however, can be output at a frame rate of, for example, 60 frames/second (30 frames/second in Embodiment 1), thus increasing the frame rate of the moving image. The imaging apparatus of Embodiment 2 is useful for shooting a subject that moves quickly or for capturing a moving image at a high speed.

Moreover, the imaging apparatus of Embodiment 2 shoots a moving image by reducing the pixel rows to be read out as described above, only in the case where the vertical resolution is not required, and in other cases, the imaging apparatus of Embodiment 2 also can shoot a moving image similarly to the imaging apparatus of Embodiment 1. Specific examples of the case where the vertical resolution is not required include a case where the imaging apparatus is operated in a view finder mode or a monitor mode, a case where a focus is adjusted by autofocus, a case where light exposure and a white balance are adjusted and the like. As shown in FIG. 5B, also in Embodiment 2, the imaging apparatus shoots a still image by the frame read-out by turning OFF the illumination light source.

Also in Embodiment 2, in order to obtain a color moving image and a color still image, the CCD may be provided with a color filter. FIG. 6 is a view showing a signal arrangement in a case where a solid-state imaging device is provided with a color filter in Embodiment 2 of the present invention. FIG. 6A shows the signal arrangement at a time of shooting a moving image, and FIG. 6B shows the signal arrangement at a time of shooting a still image.

As shown in FIG. 6, in Embodiment 2, primary color filters of green (G), red (R) and blue (B) are formed in a Bayer arrangement. Thus, as shown in FIG. 6A, a moving image is shot by reading out the reduced pixel rows, but the pixels that are read out generate primary colors individually. Thus, compared with the case of using the complementary color filters, the color reproducibility can be improved. Moreover, as shown in FIG. 6B, for shooting a still image, all of the pixels are read out and generate the primary color, respectively, thereby improving the color reproducibility more than that of Embodiment 1 (for shooting a still image, all of the pixels are read out independently also in Embodiment 1, and thus the resolutions are at the same level between in Embodiment 2 and in Embodiment 1).

It should be noted that, in Embodiment 2, the case where only two pixel rows per four pixel rows are read out is described as an example, but a cycle for reading out the pixel rows and the pixel rows to be read out may be determined according to the necessary vertical resolution and the necessary frame rate. For example, in the case of reading out only two pixel rows per six pixel rows, the vertical resolution is reduced to one-third, but the frame rate can be increased to 90 frames/second.

(Embodiment 3)

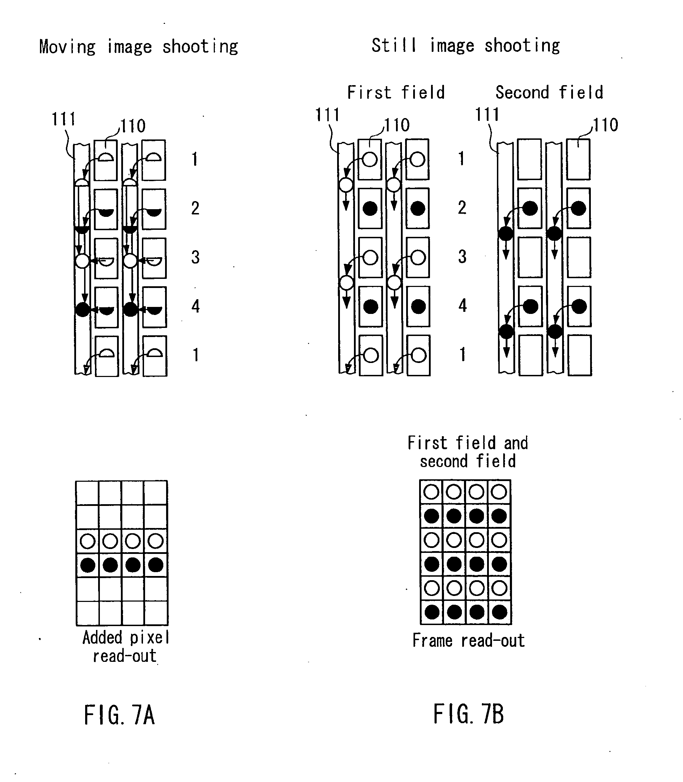

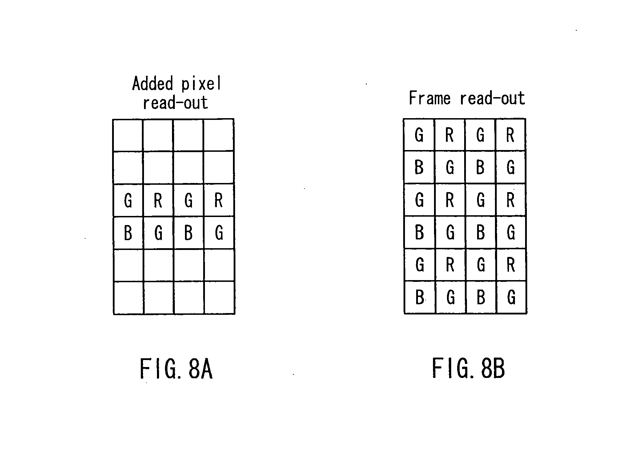

Next, an imaging apparatus and an endoscope apparatus according to Embodiment 3 of the present invention will be described with reference to FIGs. 7 and 8. FIG. 7 is an explanatory view conceptually showing an operation of a solid-state imaging device that constitutes the imaging apparatus according to Embodiment 3 of the present invention. FIG. 7A shows the operation thereof at a time of shooting a moving image, and FIG. 7B shows the operation thereof at a time of shooting a still image.

The imaging apparatus of Embodiment 3 also is distinctive from the imaging apparatus of Embodiment 1 shown in FIG. 1 in the processing that is performed inside the apparatus at the time of shooting a moving image. Except for this point, the imaging apparatus of Embodiment 3 is similar to the imaging apparatus of Embodiment 1 shown in FIG. 1. Moreover, the endoscope apparatus of Embodiment 3 also has a structure that is similar to the endoscope apparatus of Embodiment 1 shown in FIG. 4. The distinctive point from Embodiment 1 will be described below.

As shown in FIG. 7A, in Embodiment 3, the controlling apparatus adds respective charges of the two photoelectric conversion parts 110 that are positioned at an interval of one pixel row, at the time of shooting a moving image. Specifically, after performing the photoelectric conversion for one field period (for example, 1/60 seconds), the CCD driving circuit applies read-out pulses only to a first pixel row and a second pixel row from the top, where four pixel rows constitute one group, according to an instruction from the system controller. Thereby, charges that are accumulated in the photoelectric conversion parts 110 (see FIG. 20) in the first pixel row and the second pixel row are read out by the respective vertical charge transfer parts 111(see FIG. 20). Thereafter, the CCD driving circuit respectively transfers the charges of the first and second pixel rows, which are read out, to a third or fourth pixel row, by applying transfer pulses.

Subsequently, according to the instruction from the system controller, the CCD driving circuit applies read-out pulses only to the third pixel row and the fourth pixel row from the top. As a result, charges in the first pixel row that already are read out and transferred are added to charges in the third pixel row that are read out. Similarly, charges in the second pixel row that already are read out and transferred are added to charges in the fourth pixel row that are read out.

As described above, in Embodiment 3, since the signals of the two pixel rows are added without being reduced, a sensitivity at the time of shooting a moving image is increased twice, compared with that of Embodiment 2. Moreover, in Embodiment 3, since the number of lines in the vertical direction is decreased by half, the moving image can be output at a frame rate of, for example, 60 frames/second similarly to Embodiment 2. Embodiment 3 is useful particularly for shooting a moving image in the case where the CCD is provided with a primary color filter. This point will be described with reference to FIG. 8. Incidentally, as shown in FIG. 7B, also in Embodiment 3, the imaging apparatus shoots a still image by the frame read-out by turning OFF the illumination light source, similarly to Embodiment 1.

FIG. 8 is a view showing a signal arrangement in a case where a solid-state imaging device is provided with a color filter in Embodiment 3 of the present invention, FIG. 8A shows the signal arrangement at a time of shooting a moving image, and FIG. 8B shows the signal arrangement at a time of shooting a still image.

As shown in FIG. 8, also in Embodiment 3, primary color filters of green (G), red (R) and blue (B) are formed in the Bayer arrangement, similarly to Embodiment 2. At this time, as shown in FIG. 8B, two color filters that are positioned at an interval of one pixel row in the vertical direction have the same color. Accordingly, as shown in FIG. 8A, charges of the same color are added to each other when shooting a moving image. Thus, according to Embodiment 3, a moving image with a high sensitivity and high color reproducibility can be obtained.

In Embodiment 3, the case where the four pixel rows constitute one cycle, and the first and third pixel rows, and the second and fourth pixel rows from the top are read out and added respectively is explained, but the number of the pixel rows that constitute one cycle may be determined according to the necessary vertical resolution and the necessary frame rate. For example, it also is possible that six pixel rows constitute one cycle, and a first pixel row + a third pixel row + a fifth pixel row, and a second pixel row + a fourth pixel row + a sixth pixel row are read out and added, respectively. In this case, the vertical resolution is decreased to one third, but the frame rate can be increased to 90 frames/second.

(Embodiment 4)

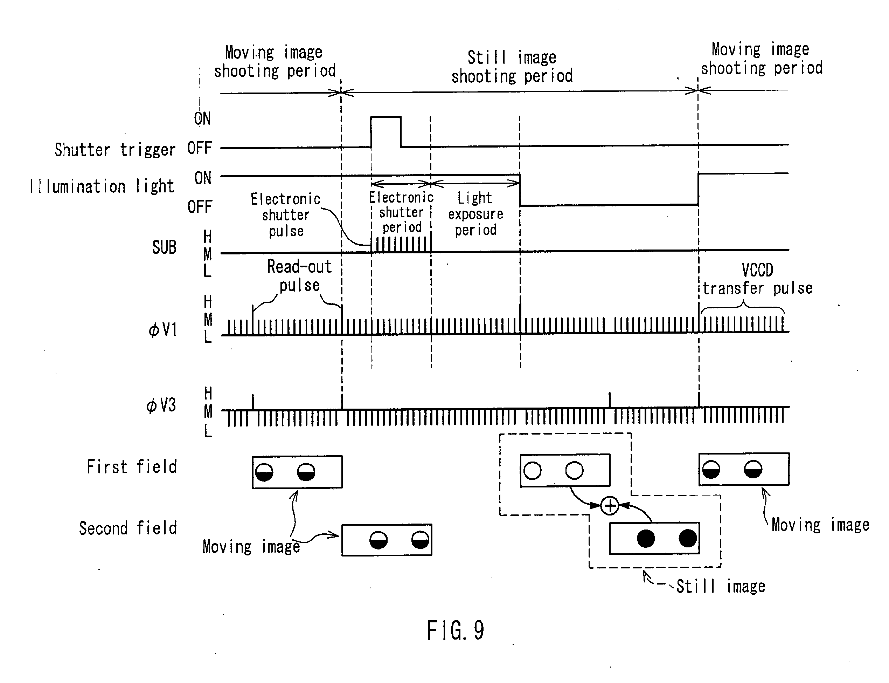

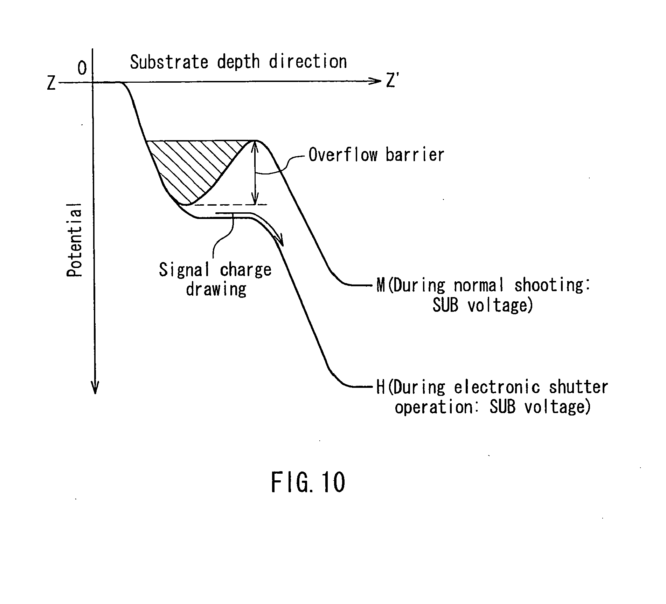

Next, an imaging apparatus and an endoscope apparatus according to Embodiment 4 will be described with reference to FIGs. 9 and 10. FIG. 9 is a timing chart showing pulses for driving a solid-state imaging device that is used in Embodiment 4 of the present invention. FIG. 10 is a view showing a potential distribution in a thickness direction of the solid-state imaging device that is used in Embodiment 4 of the present invention.

The imaging apparatus of Embodiment 4 is distinctive from the imaging apparatus of Embodiment 1 shown in FIG. 1 in having an electronic shutter. Except for this point, the imaging apparatus of Embodiment 4 is similar to the imaging apparatus of Embodiment 1 shown in FIG. 1. Moreover, the endoscope apparatus of Embodiment 4 has a structure that is similar to the endoscope apparatus of Embodiment 1 shown in FIG. 4. The distinctive point from Embodiment 1 will be described below.

As shown in FIG. 9, in Embodiment 4, the controlling apparatus of the imaging device is provided with a function to apply an electronic shutter pulse for canceling a charge that is accumulated in the photoelectric conversion part. The controlling apparatus adjusts the length of a time of light exposure for obtaining a still image, by the application of the electronic shutter pulse.

Herein, the electronic shutter pulse will be explained. Also in Embodiment 4, on the semiconductor substrate constituting the CCD, a SUB terminal is provided (see FIG. 21A) in order to apply a reverse bias voltage (a SUB voltage) between the region where the P-well is not formed and the P-well. Thus, as shown in FIG. 10, by varying the level of the reverse bias voltage, the potential height of an overflow barrier can be adjusted. For example, if the level of the reverse bias voltage is increased, the potential height of the overflow barrier is decreased accordingly, and the accumulated charge is ejected to the semiconductor substrate.

As shown in FIG. 9, in Embodiment 4, when a shutter trigger is input (ON) according to an instruction from the system controller, the CCD driving circuit applies a H-level reverse bias voltage as the electronic shutter pulse to this SUB terminal for a certain period. As a result, a signal charge that is generated in the photoelectric conversion part is drawn by the substrate, and there are no signal charges that are accumulated in the photoelectric conversion part (see FIG. 10).

Moreover, when the application of the electronic shutter pulse is completed, accumulation of the charge is started in the photoelectric conversion part. In Embodiment 4, the light exposure period is from the completion of the application of the electronic shutter pulse to the starting of the read-out of the charge that is accumulated in the photoelectric conversion part.

Incidentally, the read-out and the transfer of the charge for obtaining a still image are performed similarly to Embodiment 1. Also in Embodiment 4, a moving image is shot by the field read-out. Moreover, also in Embodiment 4, when the electronic shutter pulse is not applied, a level of the reverse bias voltage is maintained at the M-level similarly to Embodiment 1.

As described above, in Embodiment 4, the controlling apparatus can determine the starting time of the light exposure and can adjust a length of the light exposure period for obtaining a still image easily, by varying a time for supplying the electronic shutter pulse and the number thereof. Thus, according to Embodiment 4, the light exposure period can be set with a higher precision than those of Embodiments 1 to 3. Also, for example, since the light exposure period can be set to be an extremely short period of time (1/1000 seconds or less) easily, a still image of a subject that moves at a high speed also can be shot.

(Embodiment 5)

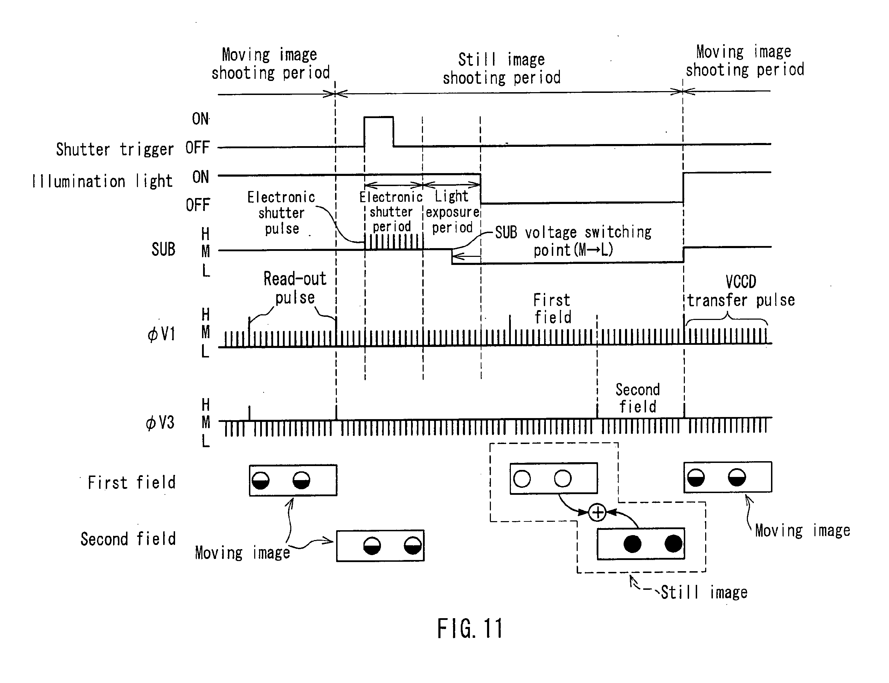

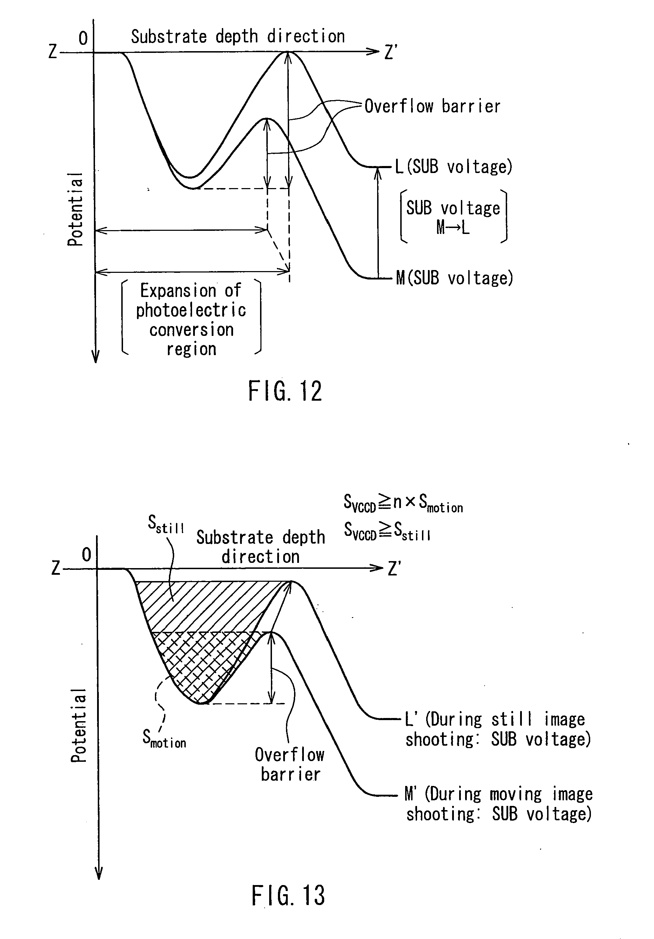

Next, an imaging apparatus and an endoscope apparatus according to Embodiment 5 will be described with reference to FIGs. 11 and 12. FIG. 11 is a timing chart showing pulses for driving a solid-state imaging device that is used in Embodiment 5 of the present invention. FIG. 12 is a view showing a potential distribution in a thickness direction of the solid-state imaging device that is used in Embodiment 5 of the present invention.

The imaging device of Embodiment 5 is distinctive from the imaging apparatus of Embodiment 1 shown in FIG. 1 in having an electronic shutter and modulating a reverse bias voltage (a SUB voltage) that is applied to the semiconductor substrate constituting the CCD. Except for these points, the imaging apparatus of Embodiment 5 is similar to the imaging apparatus of Embodiment 1 shown in FIG. 1. Moreover, the endoscope apparatus of Embodiment 5 also has a structure that is similar to the endoscope apparatus of Embodiment 1 shown in FIG. 4. The distinctive points from Embodiment 1 will be described below. Incidentally, the electronic shutter to be used in Embodiment 5 is similar to the electronic shutter that is used in Embodiment 4. Thus, in the below description, the modulation of the reverse bias voltage will be the main point.

As shown in FIG. 11, in Embodiment 5, the controlling apparatus decreases a level of the reverse bias voltage to be lower than a level thereof at the time of shooting a moving image, after a shutter trigger is input and until the read-out and the transfer of the charge by the frame read-out are completed. Specifically, the CCD driving circuit decreases the level of the reverse bias voltage from its previous M-level to a L-level during a light exposure period from the completion of the application of the electronic shutter pulse, according to an instruction from a system controller.

As a result, as shown in FIG. 12, at the same time that a potential height of the overflow barrier becomes higher than before during the light exposure period, a region where the charge can be accumulated (a photoelectric conversion region) is expanded toward a depth direction of the semiconductor substrate in the photoelectric conversion part. Then, light that is incident into the photoelectric conversion part becomes able to be subjected to the photoelectric conversion even in a deep part of the substrate, thus improving the sensitivity at the time of shooting a still image.

However, if the potential height of the overflow barrier becomes too high, an amount of the charge that is accumulated in the photoelectric conversion region becomes too large, and the charge possibly flows out from the vertical charge transfer part at the time of reading out. Thus, in Embodiment 5, the level of the reverse bias voltage preferably is set as described below.

A maximum transfer charge amount of each of the vertical charge transfer parts is represented by $SvccD$, a maximum accumulated charge amount of each of the photoelectric conversion parts at the time of shooting a moving image is represented by $S_{motion}$, and the number of pixels that are added at the time of shooting the moving image is represented by $N$ ($N = 2$ in Embodiment 5). In this case, the below formula (1) is required to be satisfied so that the charge does not flow out from the vertical charge transfer part at the time of shooting the moving image.

$$S_{VCCD} \geq N \times S_{motion} \qquad (1)$$

Moreover, a maximum accumulated charge amount of each of the photoelectric conversion parts at a time of shooting a still image is represented by $S_{still}$, then the below formula (2) is required to be satisfied such that the charge does not flow out from the vertical charge transfer part at the time of shooting the still image.

$$S_{VCCD} \geq S_{still} \qquad (2)$$

FIG. 13 is a view showing the above formulae (1) and (2). FIG. 13 is a view showing the maximum accumulated charge amount with the potential distribution. As shown in FIG. 13, since the still image is shot by the frame read-out system also in Embodiment 5, the maximum accumulated charge amount $S_{still}$ at the time of shooting the still image is larger than the maximum accumulated charge amount $S_{motion}$ at the time of shooting the moving image.

Moreover, the most appropriate level of the reverse bias voltage at the time of shooting the moving image is represented by a M'-level, then the M'-level may be set such that the above formula (1) is satisfied, that is, the potential height of the overflow barrier is equal to the potential height at the time of shooting the moving image shown in FIG. 13. Further, a level of the reverse bias voltage after the modulation at the time of shooting the still image is represented by a L'-level, then the L'-level may be set such that the above formula (2) is satisfied, that is, the potential height of the overflow barrier is equal to the potential height at the time of shooting the still image shown in FIG. 13.

As described above, if respectively setting the levels (the potential heights of the overflow barrier) of the reverse bias voltages at the time of shooting the moving image and at the time of shooting the still image as described above, the outflow of the charge from the vertical charge transfer part can be suppressed, and the amount of the charge to be accumulated in the photoelectric conversion part can be increased to be as large as possible.

(Embodiment 6)

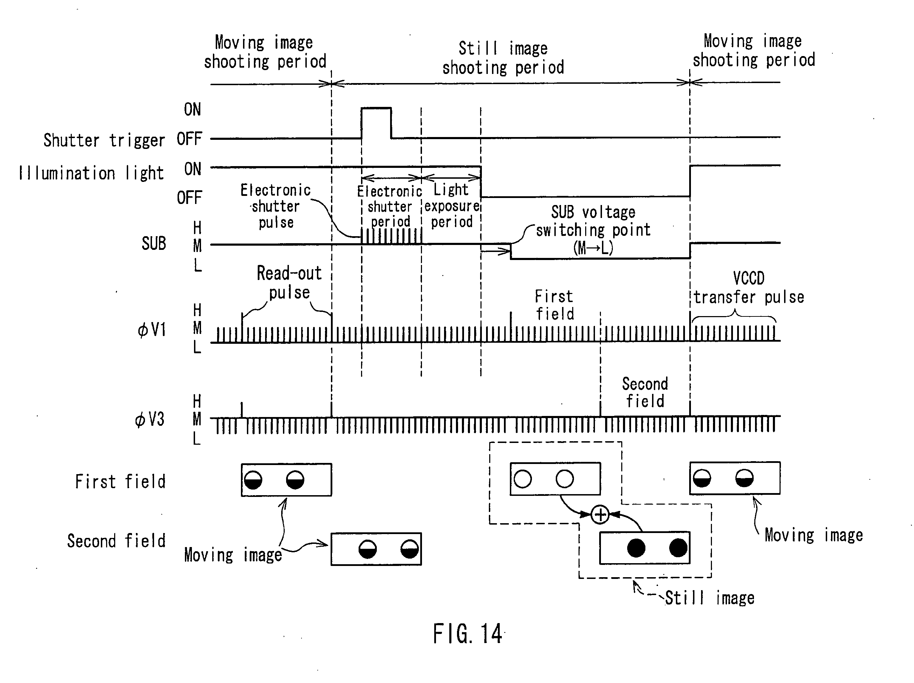

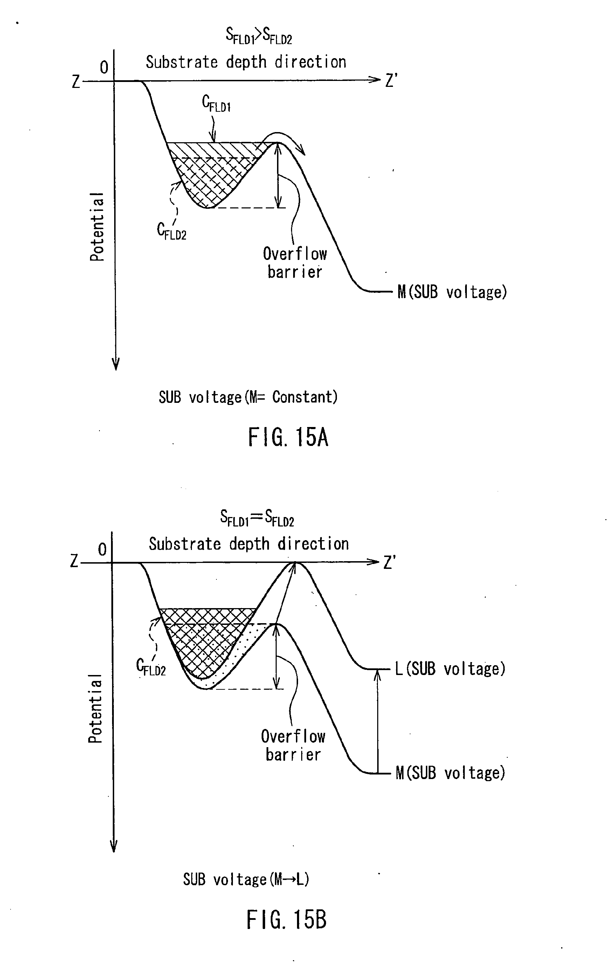

Next, an imaging apparatus and an endoscope apparatus according to Embodiment 6 of the present invention will be described with reference to FIGs. 14 and 15. FIG. 14 is a timing chart showing pulses for driving a solid-state imaging device that is used in Embodiment 6 of the present invention.

The imaging apparatus of Embodiment 6 is distinctive from the imaging apparatus of Embodiment 5 in that a modulation timing of the reverse bias voltage (the SUB voltage) is after the termination of the light exposure period. Except for this point, the imaging apparatus of Embodiment 6 is similar to the imaging apparatus of Embodiment 5. The distinctive point from Embodiment 5 will be described below. Incidentally, the endoscope apparatus of Embodiment 6 also has a structure that is similar to the endoscope apparatus of Embodiment 1 shown in FIG. 4.

As shown in FIG. 14, in Embodiment 6, the CCD driving circuit decreases a level of the reverse bias voltage from its previous M-level to a L-level after the termination of the light exposure period for obtaining a still image (after turning OFF an illumination light source), according to an instruction from the system controller. Herein, an effect of Embodiment 6 will be described below with reference to FIG. 15.

FIG. 15 is a view showing a potential distribution in a thickness direction of a solid-state imaging device that is used in Embodiment 6 of the present invention. FIG. 15A shows a case of setting the reverse bias voltage to be constant at a time of reading out the still image, and FIG. 15B shows a case of modulating the reverse bias voltage at a time of reading out the still image.

Unlike Embodiment 6, a case where the reverse bias voltage always is set at the M-level during a period when the still image is read out and transferred will be assumed (see FIGs. 2 and 9). In this case, as shown in FIG. 15A, while a charge $C_{FLD1}$ that is accumulated in a pixel column in an odd row is read out, a part of a charge $C_{FLD2}$ that is accumulated in a pixel column in an even row may be beyond the overflow barrier due to its thermal energy and ejected to a semiconductor substrate.

In this case, it is possible that a charge amount $S_{FLD1}$ of the charge $C_{FLD1}$ that is accumulated in the pixel column in the odd row is larger than a charge amount $S_{FLD2}$ of the charge $C_{FLD2}$ that is accumulated in the pixel column in the even row ($S_{FLD1} > S_{FLD2}$). Further, when $S_{FLD1}$ is larger than $S_{FLD2}$, a field step difference occurs between an image of the first field and an image of the second field, which is caused by a difference in saturation power.

In order to solve this problem, in Embodiment 6, the level of the reverse bias voltage is modulated from the M-level to the L-level while reading out the charge $C_{FLD1}$ in the odd row after the termination of the light exposure period (after turning OFF the illumination light source). Thereby, as shown in FIG. 15B, the potential height of the overflow barrier is increased, thus suppressing the ejection of a part of the charge $C_{FLD2}$ in the even row. Further, as a result, $S_{FLD1}$ becomes equal to $S_{FLD2}$, thereby suppressing the occurrence of the field step difference that is caused by the difference in the saturation power.

(Embodiment 7)

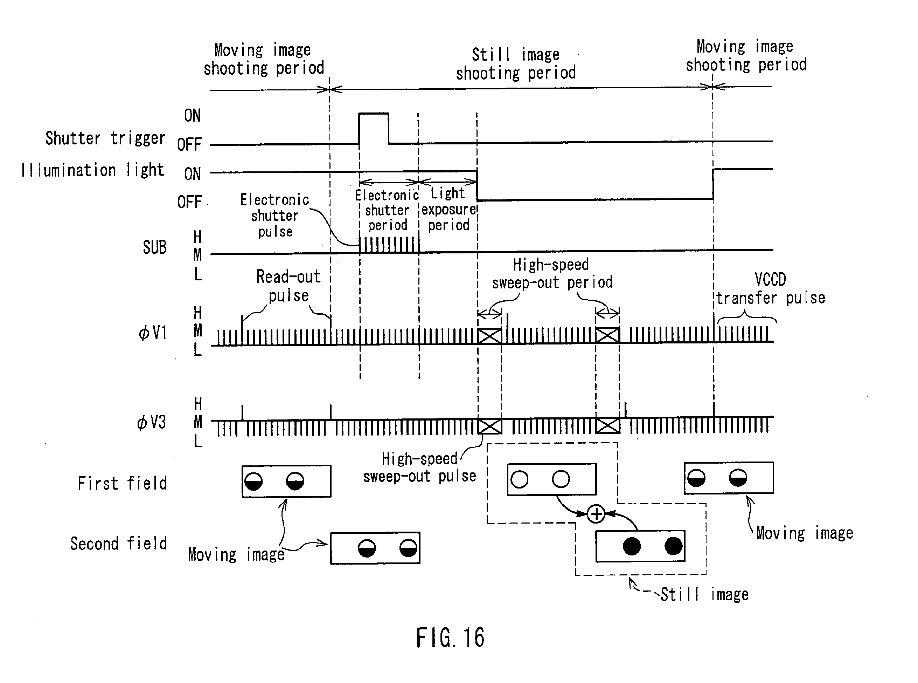

Next, an imaging apparatus and an endoscope apparatus according to Embodiment 7 of the present invention will be described with reference to FIGs. 16 to 18. FIG. 16 is a timing chart showing pulses for driving a solid-state imaging device that is used in Embodiment 7 of the present invention.

The imaging apparatus of Embodiment 7 is distinctive from the imaging apparatus of Embodiment 1 shown in FIG. 1, in having an electronic shutter and applying a high-speed sweep-out pulse to the vertical charge transfer part before reading out a still image. Except for these points, the imaging apparatus of Embodiment 7 is similar to the imaging apparatus of Embodiment 1 shown in FIG. 1. Moreover, the endoscope apparatus of Embodiment 7 also has a structure that is similar to the endoscope apparatus of Embodiment 1 shown in FIG. 4. The distinctive points from Embodiment 1 will be described below. Incidentally, the electronic shutter to be used in Embodiment 7 is similar to the electronic shutter that is used in Embodiment 4. Thus, in the below description, the application of the high-speed sweep-out pulse will be the main point.

As shown in FIG. 16, in Embodiment 7, according to an instruction from the system controller, the CCD driving circuit applies the sweep-out pulse to each of the vertical charge transfer parts, after turning OFF the illumination light source and before reading out the charge in the pixel column in the odd row (reading out the first field) and before reading out the charge in the pixel column in the even row (reading out the second field) respectively. As a result, after ejecting the charge that is accumulated in each of the vertical charge transfer parts, the charge that is accumulated in the photoelectric conversion part is read out.

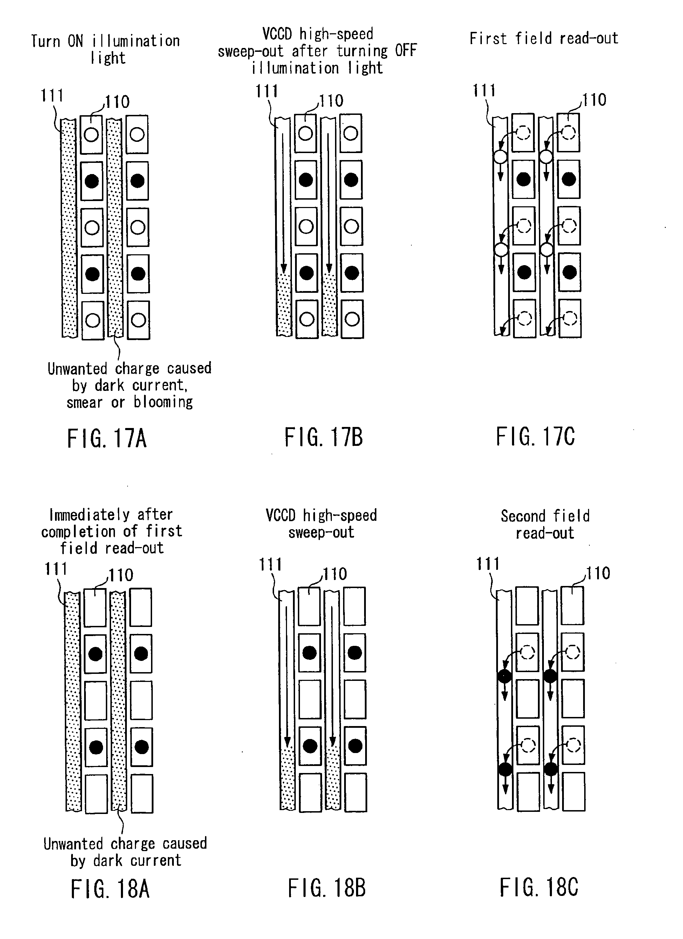

Herein, the high-speed sweep-out pulse will be explained with reference to FIGs. 17 and 18. FIGs. 17 and 18 are explanatory views showing a state of applying the high-speed sweep-out pulse to the vertical charge transfer part, and FIGs. 17A to 17C and 18A to 18C show a sequence of main steps.

As shown in FIG. 17A, if performing the light exposure for obtaining a still image (during the light exposure period), an unwanted charge may be generated in the vertical charge transfer part 111. Examples of this unwanted charge include a charge generated by heat that causes a dark current, a charge that flows out from the photoelectric conversion part and is leaked into the vertical charge transfer part (a charge that causes blooming), a charge that is generated by the photoelectric conversion in the vertical charge transfer part, which is caused by the leakage of light (a charge that causes smear), and the like. In the case where such unwanted charge is present in the vertical charge transfer part, when reading out the charge from the photoelectric conversion part, the unwanted charge is mixed into the charge that is read out, and a S/N ratio may deteriorate.

In order to solve this problem, in Embodiment 7, as shown in FIG. 17B, when the illumination light source is turned OFF, and the unwanted charge that causes smear, blooming or the like is not generated newly, the CCD driving circuit applies a high-speed sweep-out pulse to the vertical charge transfer part (see FIG. 16). Thereafter, as shown in FIG. 17C, the CCD driving circuit reads out the charge in the pixel column in the odd row (reads out the first field), according to the instruction from the system controller.

Moreover, after completion of a step shown in FIG. 17C, the unwanted charge that causes a dark current may be generated in the vertical charge transfer part by heat, as shown in FIG. 18A. Thus, as shown in FIG. 18B, the CCD driving circuit applies a high-speed sweep-out pulse to the vertical charge transfer part again. Thereafter, as shown in FIG. 18C, the CCD driving circuit reads out the charge in the pixel column in the even row (reads out the second field), according to the instruction from the system controller.

As described above, in Embodiment 7, after applying the high-speed sweep-out pulse to the vertical charge transfer part, the charges in the first field and the second field are read out. Thus, since the unwanted charge is removed and only the signal charge is extracted, a S/N ratio of the output signal is improved. Further, the image quality of the shot image can be improved thereby. Moreover, the step difference between the fields of the output signal, which is caused by a difference between the amounts of the unwanted charges generated in the first field and the second field, also is suppressed.

Also; in the example shown in FIGs. 16 to 18, the high-speed sweep-out pulse is applied each time of reading out the field, but Embodiment 7 is not limited to this. In Embodiment 7, for example, the high-speed sweep-out pulse may be applied only immediately after turning OFF the illumination light source with a large amount of the unwanted charge (see FIGs. 16 and 17B). Also in this case, the S/N ratio is considered to be improved sufficiently. Moreover, according to this case, since the application of the high-speed sweep-out pulse before reading out the second field (see FIGs. 16 and 18B) is omitted, the still image shooting period can be reduced correspondingly, and as a result, it becomes useful in a case of continuously shooting still images or the like.

As described above, in Embodiments 1 to 7, the case where the solid-state imaging device is the interline transfer type CCD imaging device is explained, but the present invention is not limited to this. In the present invention, the solid-state imaging device may be a frame interline transfer type CCD imaging device or a MOS type imaging device.

Moreover, in Embodiments 1 to 7, the overflow barrier is a vertical type overflow barrier (with an overflow drain structure), and is formed in a region from a bottom surface of the N type diffusion layer that constitutes the photoelectric conversion part to a bottom surface of the P-well.

However, the present invention is not limited to this, and the overflow barrier may be a horizontal type overflow barrier (with the overflow drain structure).

Specifically, in the case of adopting the horizontal type overflow barrier, an $N^+$ type second diffusion layer is formed in parallel with the N type diffusion layer constituting the photoelectric conversion part, and a region between them is an overflow barrier region. Moreover, a gate electrode is formed therebetween, and by adjusting a level of a voltage to be applied thereto, the potential height of the overflow barrier is adjusted.

Moreover, in any of Embodiments 1 to 7, four pixel rows constitute one cycle for the processing, but the present invention is not limited to this. In the present invention, three or another number of rows may constitute one cycle for the processing. Moreover, at the time of shooting a moving image, charges of three pixels or more may be added. Further, at the time of shooting a still image, the pixels may be read out by dividing the charges into three fields or more.

Further, the endoscope apparatus of the present embodiment is not limited to the tube type endoscope apparatus, and it may be a capsule type endoscope apparatus in the present invention. The capsule type endoscope apparatus can navigate independently, for example, inside a human body, thereby decreasing a load on a patient significantly.

The imaging apparatus of the present invention is useful particularly for decreasing the size of an endoscope apparatus and increasing the resolution of a still image in the endoscope apparatus. Thus, the imaging apparatus and the endoscope apparatus of the present invention have industrial applicability.

## Claims

1. An imaging apparatus that can shoot a moving image and a still image,
   the imaging apparatus comprising: a solid-state imaging device (1); an illumination light source (3) for illuminating a subject; and a controlling apparatus (10) for controlling the solid-state imaging device and the illumination light source, wherein
   the solid-state imaging device comprises: a plurality of photoelectric conversion parts that are arranged in matrix; and a read-out part for reading out a charge that is accumulated in each of the photoelectric conversion parts,
   the controlling apparatus (10) allows the read-out part to read out the charge in a state where the illumination light source (3) is ON at a time of shooting the moving image, and
   when an instruction for shooting the still image is provided, the controlling apparatus turns OFF the illumination light source (3) after completion of light exposure for obtaining the still image, allows the read-out part to read out all of the charges by dividing the charges into a plurality of fields while the illumination light source (3) is OFF, and synthesizes the charges that are read out separately by the respective fields so as to generate one still image.

2. The imaging apparatus according to claim 1, wherein the controlling apparatus (10) allows the read-out part to perform field read-out for adding the charges of the two or more photoelectric conversion parts that are arranged in a vertical direction, at the time of shooting the moving image.

3. The imaging apparatus according to claim 1, wherein the controlling apparatus (10) allows the read-out part to read out only a charge accumulated in a part of the photoelectric conversion parts among the plurality of the photoelectric conversion parts at the time of shooting the moving image.

4. The imaging apparatus according to claim 1, wherein
   the photoelectric conversion part is formed on a semiconductor substrate, and
   the solid-state imaging device is provided with an overflow barrier for adjusting an amount of the charge that is accumulated in the photoelectric conversion part.

5. The imaging apparatus according to claim 4, wherein the controlling apparatus (10) applies, to the semiconductor substrate, an electronic shutter pulse for ejecting the charge after the instruction for shooting the still image is provided, thereby controlling a length of a time of the light exposure for obtaining the still image.

6. The imaging apparatus according to claim 4, wherein the controlling apparatus (10) allows a potential height of the overflow barrier to be higher than a potential height at the time of shooting the moving image, after the instruction for shooting the still image is provided and until the read-out of the charge of each of the fields is completed.

7. The imaging apparatus according to claim 6, wherein the solid-state imaging device (1) is an interline transfer type solid-state imaging device,
   the read-out part is provided in each column of the plurality of the photoelectric conversion parts in the vertical direction, and comprises a plurality of charge transfer apparatuses for transferring, in the vertical direction, the charge that is read out,
   the controlling apparatus (10) allows the plurality of the charge transfer apparatuses respectively to perform field read-out for adding the charges of the $N$ photoelectric conversion parts that are arranged in the vertical direction, at the time of shooting the moving image,
   when a maximum transfer charge amount of each of the plurality of the charge transfer apparatuses is $S_{VCCD}$,
   the potential height of the overflow barrier at the time of shooting the moving image is set such that a maximum accumulated charge amount $S_{motion}$ of each of the plurality of the photoelectric conversion parts at the time of shooting the moving image satisfies the below formula (1),
   the potential height of the overflow barrier after the instruction for shooting the still image is provided and until the read-out of the charge of each of the fields is completed is set such that a maximum accumulated charge amount $S_{still}$ of each of the plurality of the photoelectric conversion parts at the time of shooting the still image satisfies a below formula (2),
   where

$$S_{VCCD} \geq N \times S_{motion} \qquad (1)$$

$$S_{VCCD} \geq S_{still} \qquad (2).$$

8. The imaging apparatus according to claim 6, wherein the controlling apparatus (10) turns OFF the illumination light source (3) and then allows the potential height of the overflow barrier to be higher than a potential height at the time of shooting the moving image, and subsequently, allows the read-out part to read out all of the charges by dividing the charges into the plurality of the fields.

9. The imaging apparatus according to claim 1, wherein the solid-state imaging device is an interline transfer type solid-state imaging device,
   the read-out part is provided in each column of the plurality of the photoelectric conversion parts in the vertical direction, and comprises a plurality of charge transfer apparatuses for transferring in the vertical direction the charge that is read out, and
   the controlling apparatus (10) turns OFF the illumination light source (3), then respectively applies to the plurality of the charge transfer apparatuses sweeping-out pulses for ejecting the charges that are accumulated in the charge transfer apparatuses, and subsequently, allows the read-out part to read out all of the charges by dividing the charges into the plurality of the fields.

10. An endoscope apparatus comprising an imaging apparatus as claimed in any preceding claim.

FIG. 1

FIG. 2

Field read-out

| Ye + G | Cy + Mg | Ye + G | Cy + Mg |
|---|---|---|---|
| Ye + Mg | Cy + G | Ye + Mg | Cy + G |
| Ye + G | Cy + Mg | Ye + G | Cy + Mg |

FIG. 3A

Frame read-out

| Ye | Cy | Ye | Cy |
|---|---|---|---|
| G | Mg | G | Mg |
| Ye | Cy | Ye | Cy |
| Mg | G | Mg | G |
| Ye | Cy | Ye | Cy |
| G | Mg | G | Mg |

FIG. 3B

FIG. 4

EP 1 887 792 A2

Moving image shooting          Still image shooting

FIG. 5A                    FIG. 5B

Reduced pixel
read-out

| G/2 | R/2 | G/2 | R/2 |
|-----|-----|-----|-----|
|     |     |     |     |
|     |     |     |     |
| B/2 | G/2 | B/2 | G/2 |
| G/2 | R/2 | G/2 | R/2 |
|     |     |     |     |

FIG. 6A

Frame read-out

| G | R | G | R |
|---|---|---|---|
| B | G | B | G |
| G | R | G | R |
| B | G | B | G |
| G | R | G | R |
| B | G | B | G |

FIG. 6B

Moving image shooting

Still image shooting

First field          Second field

Added pixel
read-out

FIG. 7A

First field and
second field

Frame read-out

FIG. 7B

Added pixel
read-out

|   |   |   |   |
|---|---|---|---|
|   |   |   |   |
| G | R | G | R |
| B | G | B | G |
|   |   |   |   |
|   |   |   |   |

FIG. 8A

Frame read-out

| G | R | G | R |
|---|---|---|---|
| B | G | B | G |
| G | R | G | R |
| B | G | B | G |
| G | R | G | R |
| B | G | B | G |

FIG. 8B

FIG. 9

EP 1 887 792 A2

FIG. 10

FIG. 11

EP 1 887 792 A2

Z — 0 Substrate depth direction → Z'

Potential

Overflow barrier

L (SUB voltage)

$\begin{bmatrix} \text{SUB voltage} \\ \text{M}\rightarrow\text{L} \end{bmatrix}$

M (SUB voltage)

Expansion of photoelectric conversion region

FIG. 12

$S_{VCCD} \geqq n \times S_{motion}$

$S_{VCCD} \geqq S_{still}$

$S_{still}$ Substrate depth direction → Z'

Z — 0

Potential

$S_{motion}$

Overflow barrier

L' (During still image shooting: SUB voltage)

M' (During moving image shooting: SUB voltage)

FIG. 13

FIG. 14

$S_{FLD1} > S_{FLD2}$

Substrate depth direction

$C_{FLD1}$

$C_{FLD2}$

Overflow
barrier

M (SUB voltage)

SUB voltage (M= Constant)

FIG. 15A

$S_{FLD1} = S_{FLD2}$

Substrate depth direction

$C_{FLD2}$

Overflow
barrier

L (SUB voltage)

M (SUB voltage)

SUB voltage (M→L)

FIG. 15B

FIG. 16

EP 1 887 792 A2

Turn ON illumination
light

111    110

Unwanted charge caused
by dark current,
smear or blooming

FIG. 17A

VCCD high-speed
sweep-out after turning OFF
illumination light

111    110

FIG. 17B

First field read-out

111    110

FIG. 17C

Immediately after
completion of first
field read-out

111    110

Unwanted charge caused
by dark current

FIG. 18A

VCCD high-speed
sweep-out

111    110

FIG. 18B

Second field
read-out

111    110

FIG. 18C

FIG. 19
PRIOR ART

FIG. 20
PRIOR ART

FIG. 21A
PRIOR ART

FIG. 21B
PRIOR ART

FIG. 22
PRIOR ART

Moving image shooting period — Still image shooting period — Moving image shooting period

Shutter trigger — ON / OFF

ON

Light exposure period

VCCD transfer pulse

Read-out pulse

SUB — H M L

φV1 — H M L

φV3 — H M L

First field — Moving image

Second field — Moving image

Still image

Moving image

Moving image shooting

First field      Second field

Still image shooting

First field

Field read-out

One-field
read-out

FIG. 23A
PRIOR ART

FIG. 23B
PRIOR ART

FIG. 24
PRIOR ART

EP 1 887 792 A2

FIG. 25
PRIOR ART

Moving image shooting

First field     Second field

111  111

110

110

111

110

111

110

111

110

Field read-out

FIG. 26A
PRIOR ART

Still image shooting

First field     Second field

111  111          111  111

110

110

110

110

First field and
second field

Frame read-out

FIG. 26B
PRIOR ART

EP 1 887 792 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3440722 B

- JP 2004328681 A